# EUROPÄISCHE PATENTSCHRIFT

(11) **EP 4 096 466 B1**
(45) Veröffentlichungstag und Bekanntmachung des Hinweises auf die Patenterteilung: **15.10.2025**
(21) Anmeldenummer: 21733727.8
(22) Anmeldetag: 07.06.2021
(51) Int. Cl.: A44B 11/25, A44B 11/26, A45F 5/02

(54) **BEI BELASTUNG GESICHERTE VERSCHLUSSVORRICHTUNG**
CLOSURE DEVICE THAT IS SECURED WHEN LOADED
DISPOSITIF DE FERMETURE SÉCURISÉ EN CAS D'APPLICATION D'UNE CHARGE

(30) Priorität: 11.06.2020 DE 102020207310
(43) Veröffentlichungstag der Anmeldung: 07.12.2022
(73) Patentinhaber: Fidlock GmbH, 30659 Hannover (DE)
(72) Erfinder: GRANITZER, Christopher, 2340 Mödling (AT); SIEBERT, Artur, 30459 Hannover (DE); BOTKUS, Breido, 30175 Hannover (DE)
(74) Vertreter: Maikowski & Ninnemann Patentanwälte Partnerschaft mbB
(86) Internationale Anmeldenummer: PCT/EP2021/065151
(87) Internationale Veröffentlichungsnummer: WO 2021/249933

(56) Entgegenhaltungen:
- EP-A1- 3 093 525
- EP-A1- 3 494 826
- EP-B1- 2 475 278
- DE-A1- 102017 212 152

## Beschreibung

Die Erfindung betrifft eine Verschlussvorrichtung nach dem Oberbegriff des Anspruchs 1.

Eine derartige Verschlussvorrichtung dient zum Verbinden zweier Baugruppen miteinander. Eine solche Verschlussvorrichtung kann beispielsweise zum Anbringen eines Gegenstands, zum Beispiel eines Werkzeugs, an einer übergeordneten Baugruppe, zum Beispiel einer Trageinrichtung, einem Gürtel oder Band, einer Leiter, einem Fahrzeug, einem Gerüst oder dergleichen, dienen.

Eine solche Verschlussvorrichtung weist ein erstes Verschlussteil auf, das ein Sperrelement, ein mit dem Sperrelement wirkverbundenes, entlang einer Kraftrichtung belastbares Kraftübertragungselement und ein relativ zu dem Sperrelement bewegbares Betätigungselement aufweist. Die Verschlussvorrichtung umfasst zudem ein zweites Verschlussteil, das ein Eingriffselement aufweist. Das Sperrelement und das Eingriffselement sind zum Verbinden des ersten Verschlussteils und des zweiten Verschlussteils miteinander aneinander ansetzbar und in einer Schließstellung miteinander verbunden. In der Schließstellung ist hierbei das Sperrelement, wenn das Kraftübertragungselement entlang der Kraftrichtung belastet ist, durch Kraftwirkung des Kraftübertragungselements in eine Sperrrichtung in Richtung einer Anlage mit dem Eingriffselement belastet. Das Betätigungselement ist betätigbar, um das Sperrelement entgegen der Sperrrichtung zum Lösen der Verbindung zwischen dem Sperrelement und dem Eingriffselement zu verstellen.

Eine solche Verschlussvorrichtung kann eine besonders feste Verbindung dadurch schaffen, dass das Sperrelement durch Kraftwirkung an dem Kraftübertragungselement in seiner Verbindung mit dem Eingriffselement gesichert ist, indem das Kraftübertragungselement das Sperrelement in Richtung einer Anlage mit dem Eingriffselement belastet. Die Verbindung zwischen den Verschlussteilen kann gelöst werden, indem das Betätigungselement betätigt wird, um dadurch ein Verstellen des Sperrelements entgegen der Sperrrichtung und somit aus einer Anlage mit dem Eingriffselement zu bewirken.

Aus der EP 3 093 525 B1 ist eine Einrichtung zum Halten einer in einem langgestreckten Element gebildeten Schlaufe mit den Merkmalen des Oberbegriffs des Anspruchs 1 bekannt, die ein Basisteil, einen Tragring und radial zu dem Tragring verschiebbare Backen aufweist. Wenigstens ein elastisches Element belastet die Backen radial nach innen, wobei, wenn die Schlaufe an radial äußeren Enden der Backen anliegt, die Backen in einer nach innen geschobenen Stellung formschlüssig in das Basisteil eingreifen. Ein Abzieher ist gegenüber dem Basisteils und dem Tragring axial verstellbar, um die Backen radial nach außen zu drücken und deren formschlüssigen Eingriff in das Basisteil aufzuheben.

Aus der EP 2 475 278 B1 ist eine Verschlussvorrichtung mit zwei Verschlussteilen bekannt, bei dem die zwei Verschlussteile in einem Schließzustand bei Belastung reibschlüssig durch Haftreibung oder rastend durch eine Rastverbindung aneinandergehalten sind, wobei magnetische Mittel zum Erzeugen einer Anziehungskraft zwischen den Verschlussteilen wirken, um das Überführen der Verschlussvorrichtung in den Schließzustand magnetisch zu unterstützen.

Aufgabe der vorliegenden Erfindung ist es, eine Verschlussvorrichtung zur Verfügung zu stellen, die einfach zu schließen ist und in einer Schließstellung eine feste Verbindung zwischen Verschlussteilen bereitstellen kann, bei komfortabler Handhabung zum Öffnen der Verschlussvorrichtung.

Diese Aufgabe wird durch einen Gegenstand mit den Merkmalen des Anspruchs 1 gelöst.

Demnach weist bei der Verschlussvorrichtung das erste Verschlussteil ein erstes Magnetelement und das zweite Verschlussteil ein zweites Magnetelement auf, wobei das erste Magnetelement und das zweite Magnetelement beim Ansetzen des Sperrelements und des Eingriffselements aneinander magnetisch anziehend zusammenwirken.

Bei der Verschlussvorrichtung wird eine belastbare Verbindung zwischen den Verschlussteilen geschaffen, indem auf Seiten des ersten Verschlussteils das Kraftübertragungselement mit dem Sperrelement in Wirkverbindung steht und bei einer Belastung an dem Kraftübertragungselement das Sperrelement des ersten Verschlussteils in seinem Eingriff mit dem Eingriffselement des zweiten Verschlussteils gesichert ist. So führt eine Belastung an dem Kraftübertragungselement zu einer Kraftwirkung an dem Sperrelement in eine Sperrrichtung in Richtung einer Anlage mit dem Eingriffselement, sodass eine Belastung an dem Kraftübertragungselement bewirkt, dass das Sperrelement in kraftbelasteter Weise in Eingriff mit dem Eingriffselement gehalten wird.

Das Schließen der Verschlussvorrichtung kann hierbei in komfortabler Weise erfolgen, indem das Ansetzen des Sperrelements und des Eingriffselements aneinander magnetisch durch Magnetelemente der Verschlussteile unterstützt wird. Die Magnetelemente wirken magnetisch anziehend zusammen derart, dass das Ansetzen des Sperrelements und des Eingriffselements magnetisch unterstützt wird und somit das Sperrelement und das Eingriffselement vorzugsweise zumindest weitestgehend selbsttätig miteinander in Eingriff gelangen, wenn das Sperrelement und das Eingriffselement aneinander angesetzt werden.

Zudem kann auch das Öffnen der Verschlussvorrichtung komfortabel und einfach erfolgen, insbesondere bei Entlastung an dem Kraftübertragungselement. Zum Öffnen kann das Betätigungselement betätigt werden, das so in Wirkverbindung mit dem Sperrelement steht, dass das Sperrelement bei Betätigen des Betätigungselements entgegen der Verstellrichtung verstellt wird. Das Verstellen des Sperrelements kann hierbei durch Einwirken des Betätigungselements auf das Sperrelement erfolgen. Das Verstellen des Sperrelements kann aber auch zum Beispiel durch eine Vorspannung oder/und Elastizität an dem Sperrelement erfolgen, ohne dass dazu das Betätigungselement unmittelbar auf das Sperrelement einwirkt, sodass in diesem Fall das Betätigungselement ein Rückstellen des Sperrelements aus der Schließstellung lediglich ermöglicht, das Rückstellen des Sperrelements aber aufgrund zum Beispiel einer Vorspannung oder/und Elastizität an dem Sperrelement zumindest weitestgehend selbsttätig erfolgt.

Das Betätigungselement und das Sperrelement können auch einstückig ausgeführt sein, z.B. geometrisch nach Art eines Parallelogramms, bei dem eine Betätigung an einer Ecke eine Winkeländerung, beispielsweise eine Spreizung, eines gegenüberliegenden Winkels bewirkt. In diesem Fall sind Abschnitte des Sperrelements relativ zu dem Betätigungselement bewegbar und betätigbar.

Es kann auch mehr als ein Sperrelement vorhanden sein, die gemeinsam über das Betätigungselement betätigbar sind.

In einer Ausgestaltung ist das Kraftübertragungselement durch ein auf Zug belastbares Zugelement ausgebildet. Das Kraftübertragungselement kann beispielsweise biegeschlaff ausgebildet sein, indem das Kraftübertragungselement zum Beispiel durch ein Seil, ein Band, einen Gurt, einen Riemen oder dergleichen ausgebildet ist, sodass in diesem Fall Zugkräfte, aber keine Druckkräfte über das Kraftübertragungselement übertragen werden können.

In einer Ausgestaltung ist das Kraftübertragungselement durch das Gehäuse verwirklicht, das seine Position durch Krafteinwirkung verändert und dadurch das Sperrelement blockiert. In dieser Ausgestaltung kann auf ein zusätzliches Kraftübertragungselemente verzichtet werden.

Die Verschlussteile der Verschlussvorrichtung sind Baugruppen zugeordnet, die über die Verschlussvorrichtung miteinander verbunden werden sollen. Eine Baugruppe ist hierbei zum Beispiel fest mit dem zweiten Verschlussteil verbunden, während die andere Baugruppe mit dem ersten Verschlussteil, insbesondere dem Kraftübertragungselement des ersten Verschlussteils verbunden ist. Kommt es zu einer Kraftwirkung zwischen den Baugruppen, kann es zu einer Belastung an dem Kraftübertragungselement kommen, sodass eine Kraftwirkung zwischen den Baugruppen zu einem Sichern der Verbindung führt, indem bei Belastung an dem Kraftübertragungselement eine Kraftwirkung an dem Sperrelement besteht und dadurch das Sperrelement in Anlage mit dem Eingriffselement gehalten wird.

In einer Ausgestaltung weist das Kraftübertragungselement einen Wirkabschnitt auf, der zumindest abschnittsweise umfänglich um das Sperrelement herum erstreckt ist. Über den Wirkabschnitt kann insbesondere eine Kraftwirkung radial nach innen bewirkt werden, sodass das Sperrelement radial nach innen in Richtung einer Anlage mit dem Eingriffselement kraftbelastet ist, wenn eine Belastung an dem Kraftübertragungselement entlang der Kraftrichtung besteht.

Ist das Kraftübertragungselement durch ein biegeschlaffes Zugelement ausgebildet, kann der Wirkabschnitt zum Beispiel durch eine Schlaufe ausgebildet sein, die an dem Sperrelement angeordnet ist und so mit dem Sperrelement in Wirkverbindung steht, dass bei einer Zugbelastung an dem Kraftübertragungselement das Sperrelement radial nach innen belastet ist und das Sperrelement somit mit dem in das Sperrelement eingreifenden Eingriffselement in Eingriff gehalten wird.

In einer Ausgestaltung weist das erste Verschlussteil ein Gehäuse auf, relativ zu dem das Sperrelement elastisch verstellbar ist. Das Sperrelement kann beispielsweise einen oder mehrere Schenkel aufweisen, die elastisch verstellt werden können, um das Sperrelement zum Schließen der Verschlussvorrichtung in Eingriff mit dem Eingriffselement und zum Öffnen der Verschlussvorrichtung außer Eingriff von dem Eingriffselement zu bringen. Das Sperrelement kann hierbei elastisch zu dem Gehäuse vorgespannt sein, beispielsweise durch elastische Verbindung mit dem Gehäuse oder durch ein oder mehrere Federelemente, über die das Sperrelement gegenüber dem Gehäuse elastisch vorgespannt ist. Das Sperrelement kann aber auch in sich elastisch ausgestaltet sein, sodass zum Beispiel Schenkel des Sperrelements elastisch zueinander verstellt werden können.

In einer Ausgestaltung ist das Betätigungselement in Richtung einer nicht betätigten Stellung relativ zu dem Gehäuse kraftbelastet. Eine solche Kraftbelastung kann beispielsweise durch ein mechanisches Federelement bewirkt werden, über das das Betätigungselement federelastisch zu dem Gehäuse vorgespannt ist. Eine solche Kraftbelastung kann aber auch zum Beispiel magnetisch bewirkt werden, indem das Betätigungselement in der Schließstellung der Verschlussvorrichtung durch Magnetwirkung in Richtung einer nicht betätigten Stellung belastet wird.

Das Betätigungselement ist somit in Richtung einer nicht betätigten Stellung vorgespannt. Nach Betätigung gelangt das Betätigungselement somit selbsttätig in seine nicht betätigte Stellung zurück, sodass die Verschlussvorrichtung durch Ansetzen der Verschlussteile aneinander erneut geschlossen werden kann, indem das Sperrelement des ersten Verschlussteils und das Eingriffselement des zweiten Verschlussteils aneinander angesetzt und miteinander in Eingriff gebracht werden.

Das erste Magnetelement ist an dem Betätigungselement angeordnet und bei Betätigung des Betätigungselements gemeinsam mit dem Betätigungselement bewegbar. Durch magnetische Wechselwirkung zwischen dem ersten Magnetelement an dem Betätigungselement des ersten Verschlussteils und dem zweiten Magnetelement an dem Eingriffselement des zweiten Verschlussteils werden die Verschlussteile bei Ansetzen aneinander zum Schließen der Verschlussvorrichtung magnetisch angezogen, sodass das Schließen der Verschlussvorrichtung magnetisch unterstützt wird. Dadurch, dass das erste Magnetelement an dem Betätigungselement angeordnet ist, kann hierbei gleichzeitig das Betätigungselement in seine nicht betätigte Stellung bewegt werden, sodass das Sperrelement des ersten Verschlussteils und das Eingriffselement des zweiten Verschlussteils miteinander in Eingriff gebracht und die Verschlussteile somit miteinander verbunden werden können. Wird das Betätigungselement zum Öffnen der Verschlussvorrichtung bewegt, werden auch die Magnetelemente relativ zueinander bewegt, wodurch zum Beispiel die magnetische Anziehungskraft zwischen den Magnetelementen abgeschwächt und somit das Öffnen der Verschlussvorrichtung durch Lösen der Verschlussvorrichtung voneinander erleichtert werden kann.

In einer Ausgestaltung weist das Sperrelement einen elastisch verformbaren Elastizitätsabschnitt und zumindest einen an dem Elastizitätsabschnitt angeordneten, mit dem Eingriffselement in Anlage bringbaren Schenkel auf. Beispielsweise kann das Sperrelement eine U-förmige Gestalt mit zwei Schenkeln aufweisen, die über den Elastizitätsabschnitt miteinander verbunden sind, wobei die Schenkel unter elastischer Verformung des Elastizitätsabschnitts elastisch zueinander verstellbar sind, um einen Eingriff mit dem Eingriffselement herzustellen und den Eingriff mit dem Eingriffselement auch wieder zu lösen.

Das Kraftübertragungselement ist hierbei vorzugsweise an dem zumindest einen Schenkel angeordnet derart, dass bei Belastung des Kraftübertragungselements eine Kraft auf den zumindest einen Schenkel wirkt und der zumindest eine Schenkel in Richtung der Sperrrichtung in Anlage mit dem Eingriffselement belastet wird.

Ist das Kraftübertragungselement beispielsweise als biegeschlaffes Zugelement, zum Beispiel in Form eines Seils, eines Bands, eines Gurts, eines Riemens oder dergleichen, ausgebildet, kann an dem zumindest einen Schenkel zum Beispiel eine kanalförmige Seilrille ausgebildet sein, in der das Kraftübertragungselement angeordnet ist und über die eine Wirkverbindung zwischen dem Kraftübertragungselement und dem zumindest einen Schenkel hergestellt ist. Bei Belastung an dem Kraftübertragungselement kommt es demzufolge zu einer Kraftwirkung an dem Schenkel in Richtung eines Eingriffs mit dem Eingriffselement.

In einer Ausgestaltung weist das Betätigungselement einen Betätigungsabschnitt auf, der bei Betätigung des Betätigungselements auf den zumindest einen Schenkel einwirkt, um den zumindest einen Schenkel entgegen der Sperrrichtung zum Lösen der Verbindung zwischen dem Sperrelement und dem Eingriffselement zu verstellen. In diesem Fall wirkt das Betätigungselement unmittelbar auf das Sperrelement ein, um das Sperrelement zum Lösen der Verbindung zwischen den Verschlussteilen zu verstellen und dadurch außer Eingriff von dem Eingriffselement zu bringen. Der Betätigungsabschnitt kann beispielsweise nach Art einer schiefen Ebene ausgebildet sein derart, dass bei Betätigung des Betätigungselements der Betätigungsabschnitt auf einen zugeordneten Abschnitt des Sperrelements, zum Beispiel an dem zumindest einen Schenkel des Sperrelements, aufläuft und dadurch den zumindest einen Schenkel entgegen der Sperrrichtung verstellt.

Das Betätigungselement kann entlang einer Betätigungsrichtung betätigbar sein, die senkrecht zur Sperrrichtung gerichtet ist. Aufgrund der Wirkverbindung zwischen dem Betätigungselement und dem Sperrelement kommt es somit zu einer Kraftumlenkung, aufgrund derer bei Betätigung des Betätigungselements entlang der Betätigungsrichtung das Sperrelement quer zur Betätigungsrichtung, nämlich entgegen der Sperreinrichtung, verstellt wird, um auf diese Weise den Eingriff zwischen dem Sperrelement und dem Eingriffselement aufzuheben und die Verschlussteile voneinander lösen zu können.

In einer Ausgestaltung weist das Sperrelement einen Sperrabschnitt auf, der in der Schließstellung formschlüssig mit dem Eingriffselement in Eingriff steht. In der Schließstellung besteht somit ein formschlüssiger Eingriff zwischen dem Sperrelement und dem Eingriffselement, sodass darüber die Verschlussteile formschlüssig aneinandergehalten sind. Bei Belastung an dem Kraftübertragungselement ist der Eingriff durch Kraftwirkung auf das Sperrelement zusätzlich gesichert, sodass die Verschlussvorrichtung unter Belastung nicht oder zumindest nicht ohne weiteres geöffnet werden kann. Ein (einfaches) Öffnen der Verschlussvorrichtung ist erst bei Entlastung durch Betätigung des Betätigungselements möglich.

Um das Kraftübertragungselement zu entlasten, kann an dem Kraftübertragungselement zum Beispiel ein Griff angeordnet sein, an dem ein Nutzer angreifen kann, um eine Krafteinleitung über das Kraftübertragungselement in das erste Verschlussteil zu reduzieren.

In anderer Ausgestaltung kann auch zum Beispiel ein Reibschluss zwischen dem Sperrelement und dem Eingriffselement in der Schließstellung bestehen, indem einander zugeordnete Reibflächen des Sperrelements und des Eingriffselements kraftschlüssig miteinander in Anlage sind, wenn sich die Verschlussvorrichtung in ihrer Schließstellung befindet. Der Reibschluss wird bei Belastung an dem Kraftübertragungselement gesichert, indem das Sperrelement in Anlage mit dem Eingriffselement belastet wird.

In einer Ausgestaltung weist das erste Verschlussteil ein Formschlusselement in Form zum Beispiel eines Knopfs oder Stifts auf, das die Bewegung des Betätigungselements blockiert, damit der Verschluss auch ohne Last sich nicht zufällig öffnen lässt.

Ein System weist zum Beispiel eine Nutzbaugruppe und eine Verschlussvorrichtung nach der vorangehend beschriebenen Art auf. Die Nutzbaugruppe kann beispielsweise an dem Kraftübertragungselement angeordnet sein, sodass bei Kraftwirkung an der Nutzbaugruppe über das Kraftübertragungselement eine Belastung in das erste Verschlussteil eingeleitet und dadurch eine Verbindung zwischen den Verschlussteilen der Verschlussvorrichtung gesichert wird.

Die Nutzbaugruppe kann beispielsweise durch ein Werkzeug, zum Beispiel in Form eines elektrischen Werkzeugs wie eines Akkuschraubers, eines Bohrers oder dergleichen, oder auch in Form eines nicht-elektrischen Werkzeugs wie eines Hammers, eines Schraubenschlüssels oder einer Zange, ausgebildet sein. Über die Verschlussvorrichtung kann die Nutzbaugruppe an einer übergeordneten Baugruppe, zum Beispiel einer Trageinrichtung, zum Beispiel einer Leiter, einem Gerüst, einem Fahrzeug oder dergleichen, befestigt werden, wobei bei Belastung an der Nutzbaugruppe die Verbindung gesichert ist und die Verbindung bei Entlastung gelöst werden kann, um die Nutzbaugruppe von der übergeordneten Baugruppe zu trennen.

Nach einem weiteren Aspekt weist ein System eine Nutzbaugruppe und eine Verschlussvorrichtung auf. Die Verschlussvorrichtung weist ein erstes Verschlussteil und ein zweites Verschlussteil auf. Das erste Verschlussteil umfasst ein entlang einer Kraftrichtung belastbares, mit der Nutzbaugruppe verbundenes Kraftübertragungselement und ein erstes Magnetelement. Das zweite Verschlussteil umfasst ein zweites Magnetelement. Das erste Verschlussteil und das zweite Verschlussteil sind aneinander ansetzbar, in einer Schließstellung miteinander verbunden und zum Öffnen der Verschlussvorrichtung voneinander lösbar. Das erste Magnetelement und das zweite Magnetelement wirken beim Ansetzen des ersten Verschlussteils und des zweiten Verschlussteils aneinander magnetisch anziehend zusammen. Dabei ist vorgesehen, dass das Kraftübertragungselement einen bei einer Belastung an dem Kraftübertragungselement verformbaren, stoßmindernden Abschnitt aufweist.

Die Verschlussvorrichtung kann insbesondere nach der vorangehend beschriebenen Art ausgestaltet sein, sodass vollumfänglich auf die vorangehenden Erläuterungen zu Vorteilen und vorteilhaften Ausgestaltungen verwiesen wird.

Das Kraftübertragungselement kann insbesondere als Zugelement zur Übertragung von Zugkräften, vorzugsweise ausschließlich Zugkräften ausgebildet sein. Das Kraftübertragungselement kann beispielsweise biegeschlaff ausgebildet sein, zum Beispiel in Form eines Seils, Bands, Gurts, Riemens oder dergleichen. Über das Kraftübertragungselement kann eine Nutzbaugruppe, zum Beispiel ein Werkzeug, mit dem ersten Verschlussteil verbunden sein, wobei die Nutzbaugruppe über die Verschlussvorrichtung an einer übergeordneten Baugruppe lösbar festgelegt werden kann.

Der bei einer Belastung an dem Kraftübertragungselement verformbare, stoßmindernde Abschnitt kann insbesondere bei einer Stoßbelastung an dem Kraftübertragungselement eine Längenänderung erfahren. Der stoßmindernde Abschnitt kann beispielsweise miteinander vernähte Lagen aufweisen, wobei bei einer Stoßbelastung, die eine durch die Nahtstärke bestimmte Grenzkraft übersteigt, die Nähte ausreißen und somit der stoßmindernde Abschnitt gelängt werden kann.

Der stoßmindernde Abschnitt kann insbesondere plastisch und irreversibel verformbar sein, insbesondere durch Aufreißen von Nähten. Alternativ kann der stoßmindernde Abschnitt auch elastisch verformbar sein.

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Ausführungsbeispiels einer Verschlussvorrichtung mit einem ersten Verschlussteil und einem zweiten Verschlussteil, die in einer Schließstellung aneinander angesetzt und aneinandergehalten sind;
- Fig. 2A: eine Draufsicht auf die Anordnung gemäß Fig. 1;
- Fig. 2B: eine Schnittansicht entlang der Linie A-A gemäß Fig. 1;
- Fig. 3: eine Explosionsansicht der Anordnung gemäß Fig. 1;
- Fig. 4: eine Explosionsansicht der Verschlussvorrichtung, mit einem Kraftübertragungselement am ersten Verschlussteil;
- Fig. 5A: eine Draufsicht auf die Verschlussvorrichtung in einer Schließstellung;
- Fig. 5B: eine Schnittansicht entlang der Linie A-A gemäß Fig. 5A;
- Fig. 6A: eine Draufsicht auf die Verschlussvorrichtung beim Betätigen eines Betätigungselements zum Öffnen der Verschlussvorrichtung;
- Fig. 6B: eine Schnittansicht entlang der Linie A-A gemäß Fig. 6A;
- Fig. 7A: eine Draufsicht auf die Verschlussvorrichtung beim Schließen;
- Fig. 7B: eine Seitenansicht der Verschlussvorrichtung;
- Fig. 7C: eine Schnittansicht entlang der Linie A-A gemäß Fig. 7A;
- Fig. 7D: eine vergrößerte Ansicht im Ausschnitt B gemäß Fig. 7C;
- Fig. 8A: eine Draufsicht auf die Verschlussvorrichtung beim weiteren Schließen;
- Fig. 8B: eine Seitenansicht der Verschlussvorrichtung;
- Fig. 8C: eine Schnittansicht entlang der Linie A-A gemäß Fig. 8A;
- Fig. 8D: eine vergrößerte Ansicht im Ausschnitt B gemäß Fig. 8C;
- Fig. 9A: eine Draufsicht auf die Verschlussvorrichtung in einer Schließstellung;
- Fig. 9B: eine Seitenansicht der Verschlussvorrichtung;
- Fig. 9C: eine Schnittansicht entlang der Linie A-A gemäß Fig. 9A;
- Fig. 9D: eine Schnittansicht entlang der Linie C-C gemäß Fig. 9B;
- Fig. 10A: eine Draufsicht auf die Verschlussvorrichtung in der Schließstellung, unter Belastung;
- Fig. 10B: eine Seitenansicht der Verschlussvorrichtung;
- Fig. 10C: eine Schnittansicht entlang der Linie A-A gemäß Fig. 10A;
- Fig. 10D: eine Schnittansicht entlang der Linie C-C gemäß Fig. 10B;
- Fig. 11A: eine Draufsicht auf die Verschlussvorrichtung in der Schließstellung, bei Entlastung;
- Fig. 11B: eine Seitenansicht der Verschlussvorrichtung;
- Fig. 11C: eine Schnittansicht entlang der Linie A-A gemäß Fig. 11A;
- Fig. 11D: eine Schnittansicht entlang der Linie C-C gemäß Fig. 11B;
- Fig. 12A: eine Draufsicht auf die Verschlussvorrichtung, bei Betätigung des Betätigungselements zum Öffnen der Verschlussvorrichtung;
- Fig. 12B: eine Seitenansicht der Verschlussvorrichtung;
- Fig. 12C: eine Schnittansicht entlang der Linie A-A gemäß Fig. 12A;
- Fig. 12D: eine Schnittansicht entlang der Linie C-C gemäß Fig. 12B;
- Fig. 13A: eine Draufsicht auf die Verschlussvorrichtung bei geöffneter Verschlussvorrichtung;
- Fig. 13B: eine Seitenansicht der Verschlussvorrichtung;
- Fig. 13C: eine Schnittansicht entlang der Linie A-A gemäß Fig. 13A;
- Fig. 13D: eine Schnittansicht entlang der Linie C-C gemäß Fig. 13B;
- Fig. 14: eine Ansicht einer Verschlussvorrichtung zum Verbinden einer Nutzbaugruppe in Form eines Werkzeugs mit einer übergeordneten Baugruppe, zum Beispiel einer Leiter;
- Fig. 15: eine schematische Ansicht einer Verschlussvorrichtung mit einer zugeordneten Nutzbaugruppe in Form eines Werkzeugs mit einer übergeordneten Baugruppe, zum Beispiel einem Gürtel;
- Fig. 16: eine andere Ansicht einer Verschlussvorrichtung mit einer zugeordneten Nutzbaugruppe in Form eines Werkzeugs mit einer übergeordneten Baugruppe, zum Beispiel einem Armband;
- Fig. 17A: eine Ansicht eines anderen Ausführungsbeispiels einer Verschlussvorrichtung, in einer Schließstellung, ohne Belastung an einem Kraftübertragungselement;
- Fig. 17B: die Verschlussvorrichtung gemäß Fig. 17A, bei Belastung in der Schließstellung;
- Fig. 17C: die Verschlussvorrichtung beim Öffnen;
- Fig. 18: eine Ansicht eines anderen Ausführungsbeispiels einer Verschlussvorrichtung;
- Fig. 19A: die Verschlussvorrichtung gemäß Fig. 18 in einer Schließstellung;
- Fig. 19B: die Verschlussvorrichtung in der Schließstellung bei Belastung; und
- Fig. 19C: die Verschlussvorrichtung bei Betätigung zum Öffnen.

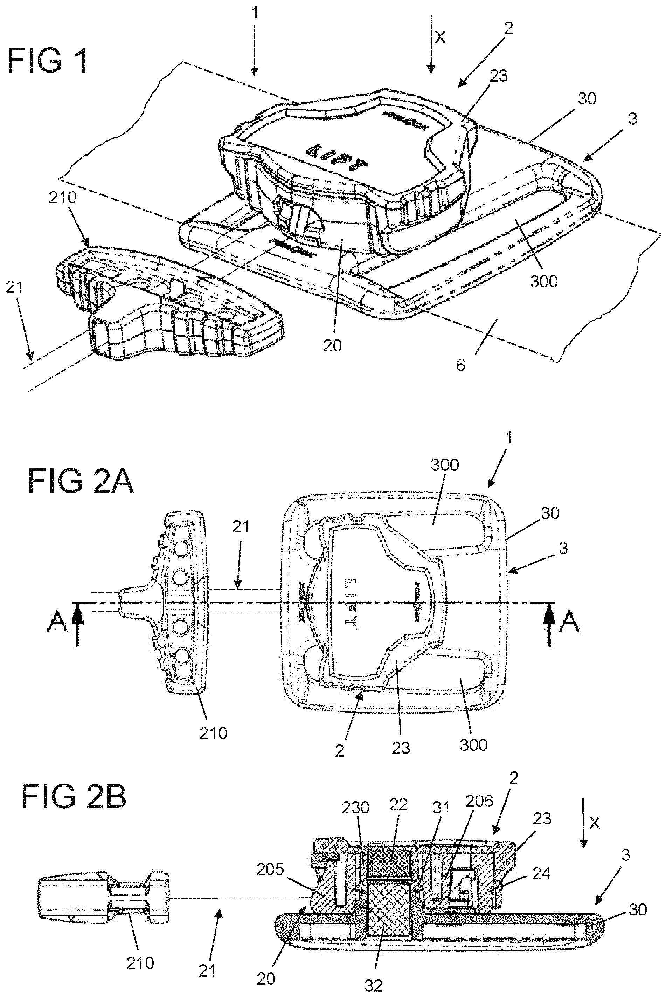

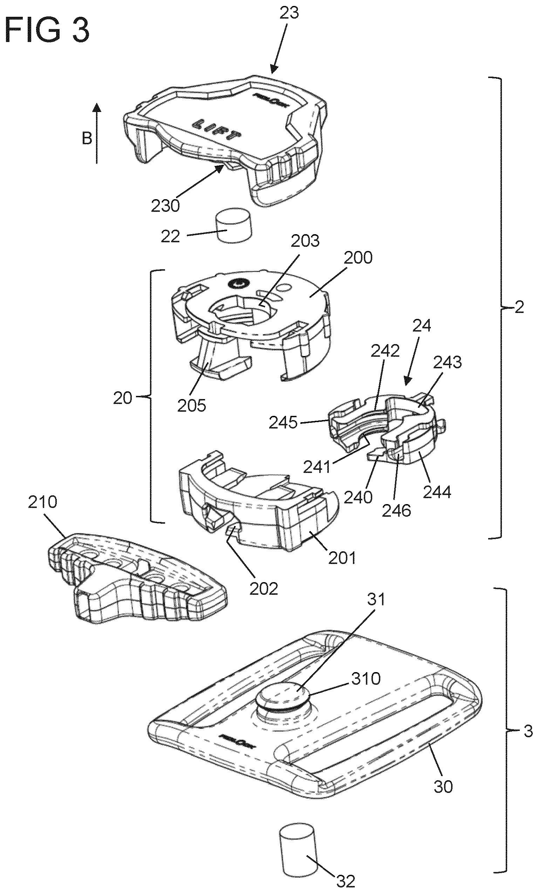

Fig. 1 bis 13A-13D zeigen ein Ausführungsbeispiel einer Verschlussvorrichtung 1, die ein erstes Verschlussteil 2 und ein zweites Verschlussteil 3 aufweist und zum Verbinden zweier Baugruppen miteinander dient. Eine erste Baugruppe ist hierbei dem ersten Verschlussteil 2 zugeordnet, während eine zweite Baugruppe dem zweiten Verschlussteil 3 zugeordnet ist, sodass durch Verbinden der Verschlussteile 2, 3 miteinander die Baugruppen aneinander festgelegt werden können.

Die Verschlussteile 2, 3 können entlang einer Schließrichtung X aneinander angesetzt werden und sind in einer Schließstellung aneinandergehalten, sodass die den Verschlussteilen 2, 3 zugeordneten Baugruppen über die Verschlussteile 2, 3 miteinander verbunden sind. Das erste Verschlussteil 2 kann betätigt werden, um die Verbindung zwischen den Verschlussteilen 2, 3 zu lösen und dadurch die den Verschlussteilen 2, 3 zugeordneten Baugruppen voneinander zu trennen.

Bei dem dargestellten Ausführungsbeispiel weist das erste Verschlussteil 2 ein Gehäuse 20 auf, das durch zwei Gehäuseteile 200, 201 gebildet ist, die zur Komplettierung des Gehäuses 20 aneinander angesetzt und fest miteinander verbunden sind.

Das Gehäuse 20 fasst ein Sperrelement 24 ein, das bei dem dargestellten Ausführungsbeispiel eine U-förmige Gestalt aufweist, mit zwei Schenkeln 244, 245, die über einen Elastizitätsabschnitt 243 miteinander verbunden und unter elastischer Verformung des Elastizitätsabschnitts 243 elastisch zueinander verstellbar sind.

An dem Gehäuse 20 ist zudem ein Betätigungselement 23 angeordnet, das entlang einer der Schließrichtung X entgegengesetzten Betätigungsrichtung B an dem Gehäuse 20 verschiebbar ist und mit dem Sperrelement in Wirkverbindung steht.

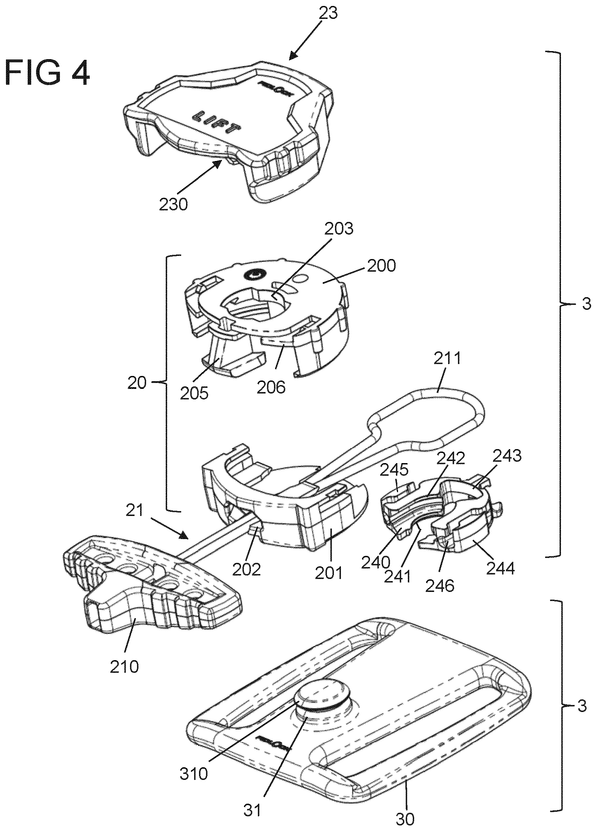

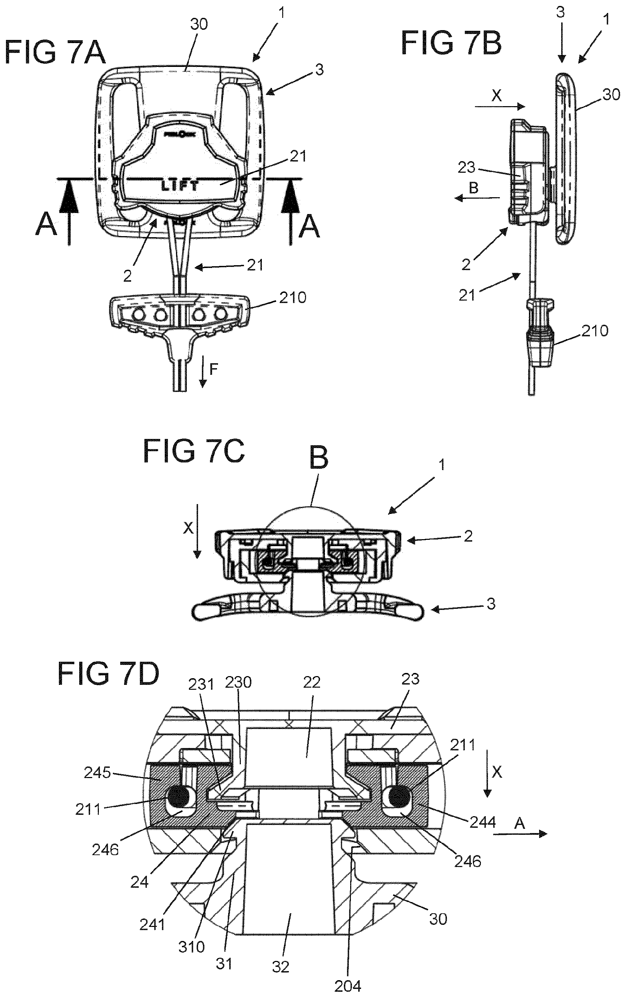

Das Gehäuseteil 201 bildet an einer Frontseite eine Öffnung 202 aus, die durch einen Führungsabschnitt 205 des Gehäuseteils 200 in zwei Abschnitte geteilt ist und über die ein Kraftübertragungselement 21 in Form eines biegeschlaffen Zugelements, dargestellt beispielsweise in der Explosionsansicht gemäß Fig. 4, in das Gehäuse 20 eingeführt ist. An dem Kraftübertragungselement 21 ist ein Griff 210 angeordnet, über den ein Nutzer an dem Kraftübertragungselement 21 angreifen kann. Mit dem Kraftübertragungselement 21 kann eine dem Verschlussteil 2 zugeordnete Baugruppe verbunden sein, wobei eine solche Baugruppe eine (Zug-)Belastung an dem Verschlussteil 2 in eine Kraftrichtung F (siehe zum Beispiel Fig. 7A) bewirkt.

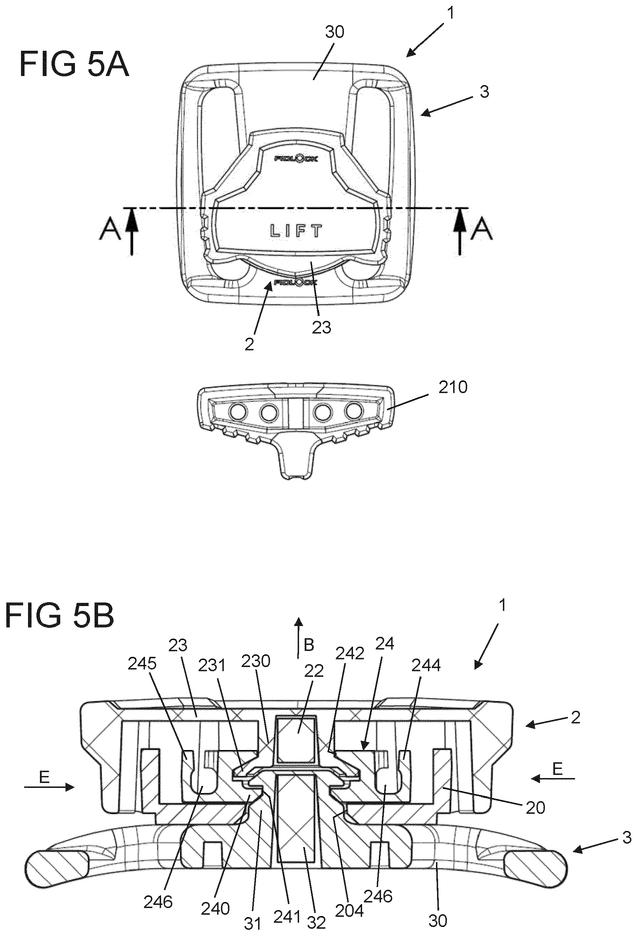

Zum Verbinden der Verschlussteile 2, 3 miteinander kann ein Eingriffselement 31 des zweiten Verschlussteils 3 in eine Öffnung 204 am Boden des Gehäuseteils 201 eingesetzt und mit durch innere Kanten der Schenkel 244, 245 ausgebildeten Sperrabschnitten 241 im Bereich eines Bodens 240 des Sperrelements 24 in Eingriff gebracht werden, wie dies zum Beispiel aus den Ansichten gemäß Fig. 5A und 5B ersichtlich ist. In einer Schließstellung stehen die Sperrabschnitte 241 der Schenkel 244, 245 mit einem umlaufenden Sperrvorsprung 310 an einem von einer Basis 30 abliegenden Kopfende des zapfenförmigen Eingriffselements 31 des Verschlussteils 3 in Eingriff, sodass darüber eine formschlüssige Verbindung zwischen den Verschlussteilen 2, 3 hergestellt ist.

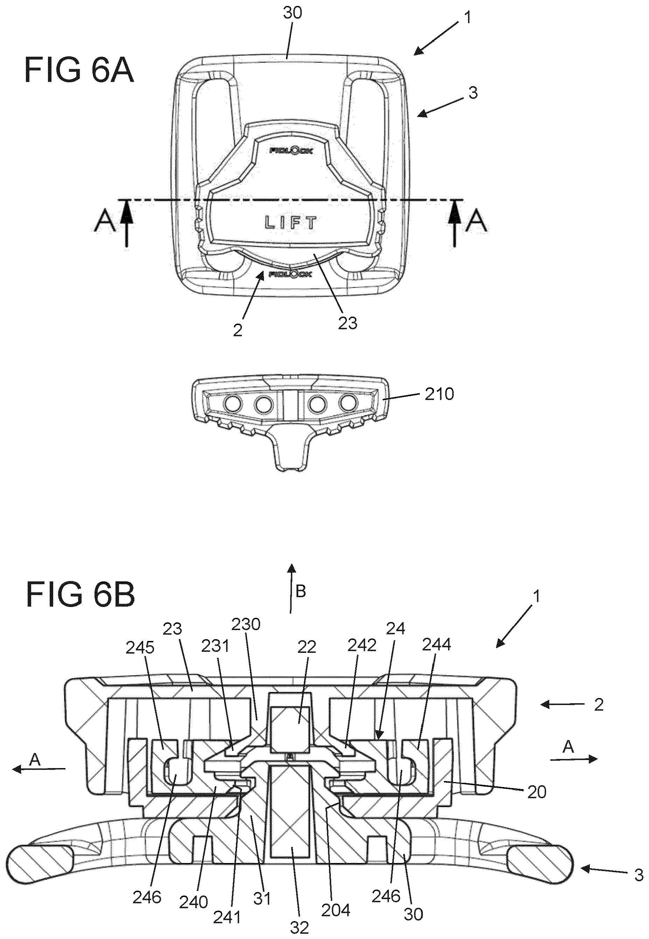

Das Betätigungselement 23 weist an einer dem Sperrelement 24 zugewandten Innenseite einen vorspringenden Abschnitt 230 auf, der durch eine Öffnung 203 an einer Oberseite des Gehäuseteils 200 ragt und an einander abgewandten Seiten Betätigungsabschnitte 231 trägt, über die eine Wirkverbindung zu den Schenkeln 244, 245 des Sperrelements 24 hergestellt ist, wie dies zum Beispiel aus Fig. 5B in Zusammenschau mit Fig. 6B ersichtlich ist. Die Sperrabschnitte 231 sind jeweils einem der Schenkel 244, 245 zugeordnet und ragen in eine Eingriffsöffnung 242 des Sperrelements 24 hinein derart, dass bei einer Betätigung des Betätigungselements 23 in eine Betätigungsrichtung B die nach Art von schiefen Ebenen ausgestalteten Betätigungsabschnitte 231 auf Kantenabschnitte an den Schenkeln 244, 245 im Bereich der Eingriffsöffnung 242 auflaufen und dadurch die Schenkel 244, 245 entlang einer Spreizrichtung A zum Aufspreizen des Sperrelements 24 verstellen, wie dies aus Fig. 6B ersichtlich ist.

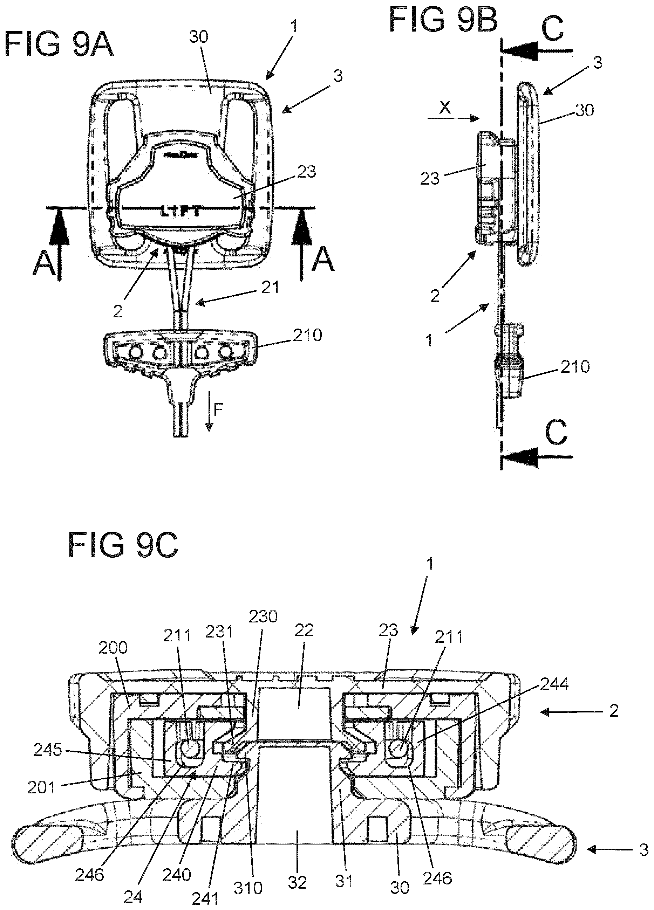

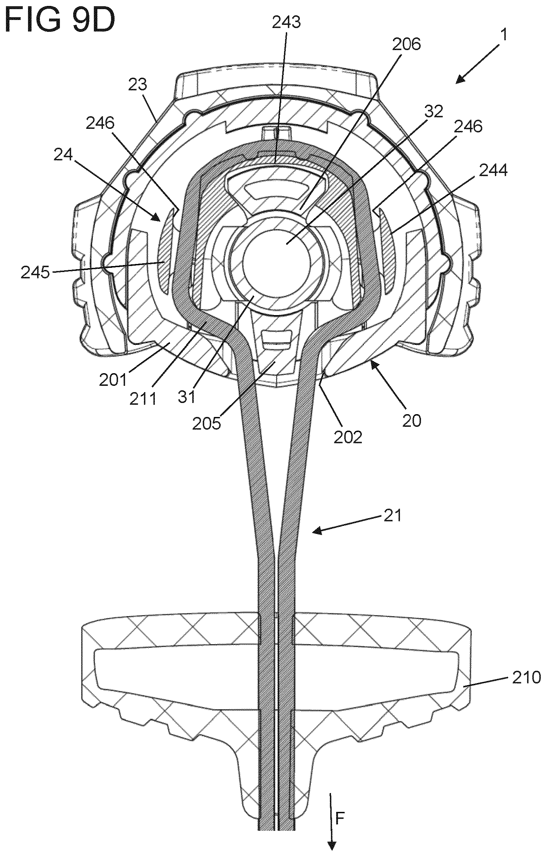

Das Kraftübertragungselement 21 bildet einen Wirkabschnitt 211 nach Art einer Schlaufe aus, die um das Sperrelement 24 herumgelegt ist, wie dies zum Beispiel aus Fig. 4 in Zusammenschau mit Fig. 9D ersichtlich ist. Ein jeder Schenkel 244, 245 des Sperrelements 24 weist hierbei eine Seilrille 246 nach Art eines Kanals auf, durch die hindurch das Kraftübertragungselement 21 erstreckt ist. Der Wirkabschnitt 211 ist außenseitig um den Elastizitätsabschnitt 243 herum gelegt und erstreckt sich, wie aus Fig. 9D ersichtlich, durch beide Seilrillen 246 der Schenkel 244, 245 und durch die Öffnung 202 im Gehäuse 20 hindurch.

Die Verschlussvorrichtung 1 weist Magnetelemente 22, 32 auf, von denen ein Magnetelement 22 an dem Abschnitt 230 des Betätigungselements 23 und somit am ersten Verschlussteil 2 und das andere Magnetelement 32 am Eingriffselement 31 des zweiten Verschlussteils 3 angeordnet ist. Die Magnetelemente 22, 32 wirken magnetisch anziehend zusammen derart, dass das Ansetzen der Verschlussteile 2, 3 zum Schließen der Verschlussvorrichtung 1 magnetisch unterstützt wird und das Eingriffselement 31 des Verschlussteils 3 im Wesentlichen selbsttätig in Eingriff mit dem Sperrelement 24 des Verschlussteils 2 gelangt.

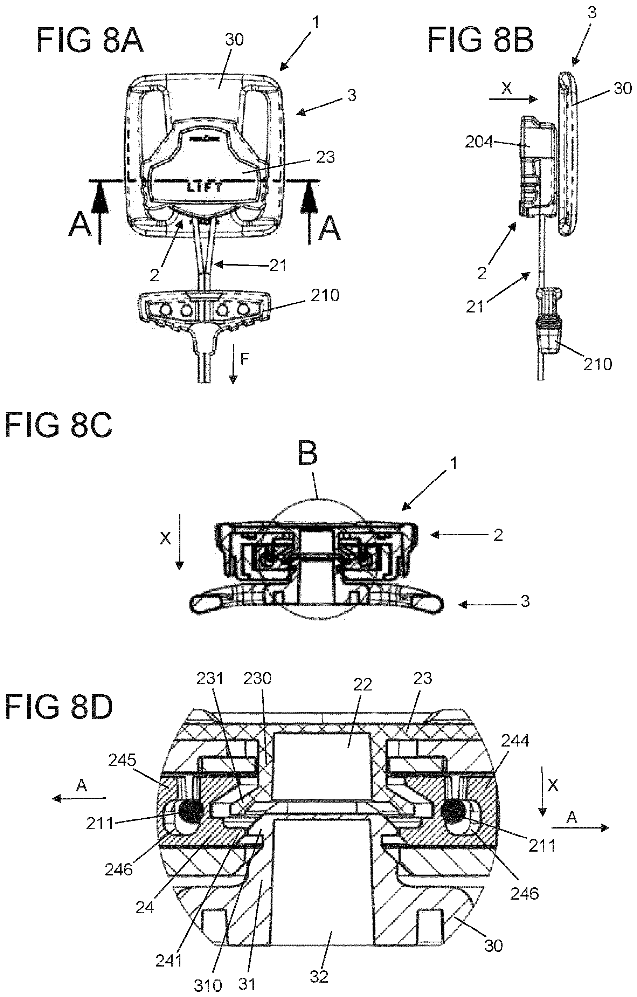

Zum Schließen der Verschlussvorrichtung können die Verschlussteile 2, 3 entlang der Schließrichtung X aneinander angesetzt werden, wie dies aus Fig. 7A-7D und 8A-8D ersichtlich ist, sodass das Eingriffselement 31 durch die Öffnung 204 am Boden des Gehäuses 20 in Anlage mit den Sperrabschnitten 241 der Schenkel 244, 245 gelangt und durch Auflaufen auf die Sperrabschnitte 241 die Schenkel 244, 245 entlang der Spreizrichtung A gegeneinander spreizt, sodass das Sperrelement 24 geweitet wird und das Eingriffselement 31 mit den Schenkeln 244, 245 in Eingriff schnappt.

In einer Schließstellung, dargestellt in Fig. 9A-9D, stehen die Sperrabschnitte 241 der Schenkel 244, 245 im Bereich des Bodens 240 des Sperrelements 24 in Eingriff mit dem Sperrvorsprung 310 des Eingriffselements 31, sodass eine formschlüssige Verbindung zwischen den Verschlussteilen 2, 3 hergestellt ist.

Das Ansetzen der Verschlussteile 2, 3 wird hierbei durch die Magnetelemente 22, 32 der Verschlussteile 2, 3 in magnetisch anziehender Weise unterstützt, sodass der Eingriff im Wesentlichen selbsttätig hergestellt wird.

Dadurch, dass das Magnetelement 22 am Abschnitt 230 des Betätigungselements 23 angeordnet ist, wird beim Schließen das Betätigungselement 23 in eine nicht betätigte Stellung belastet, in der das Betätigungselement 23 insbesondere nicht zum Aufspreizen auf das Sperrelement 24 einwirkt.

An dem Gehäuseteil 201 des Gehäuses 20 sind Führungsabschnitte 205, 206 geformt, wie dies beispielsweise aus Fig. 4 in Zusammenschau mit Fig. 2B ersichtlich ist. Beim Ansetzen der Verschlussteile 2, 3 entlang der Schließrichtung X aneinander gleitet das Eingriffselement 31 des Verschlussteils 3 zwischen die Führungsabschnitten 205, 206 und wird dadurch an dem Gehäuse 20 geführt, sodass einem Verkippen der Verschlussteile 2, 3 beim Ansetzen aneinander entgegengewirkt wird.

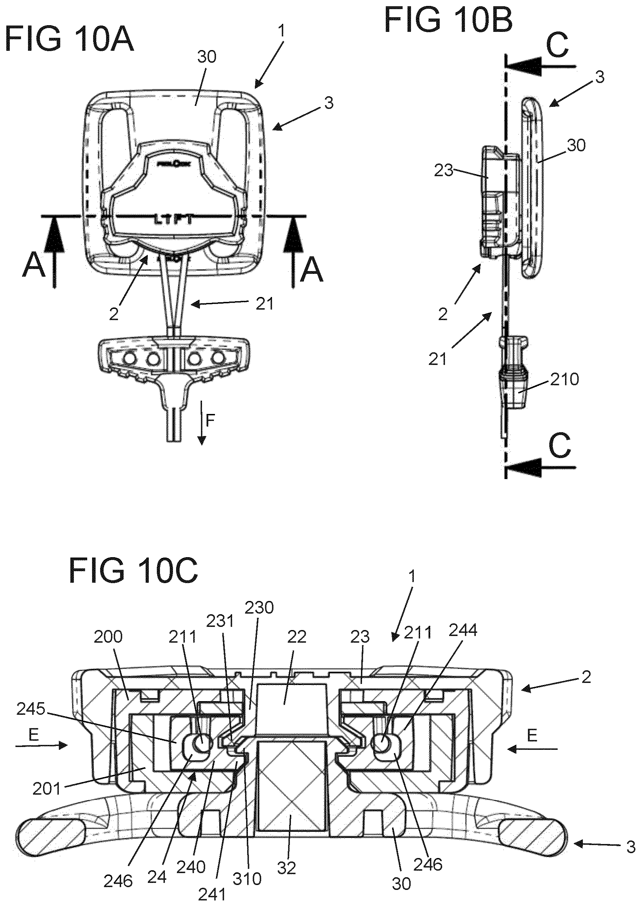

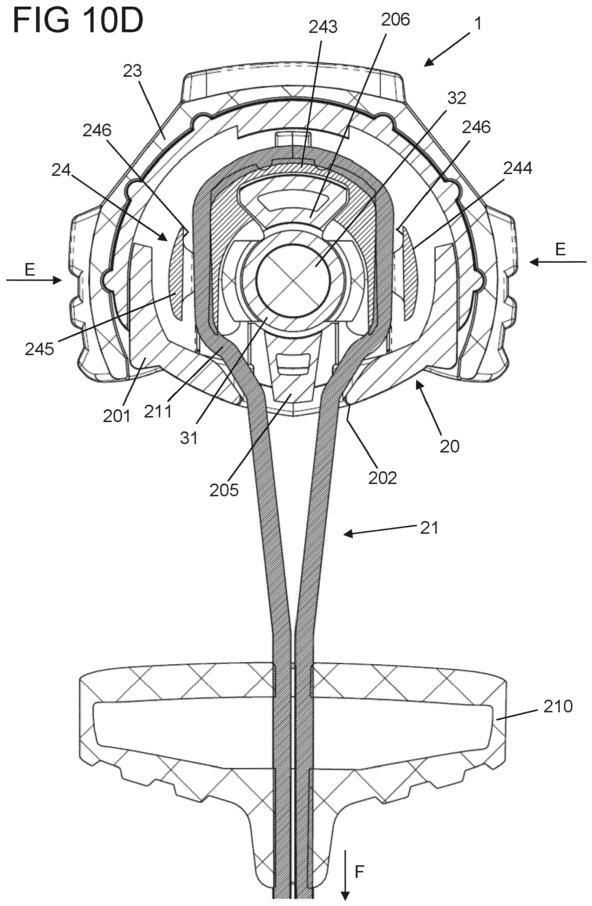

Wird in der Schließstellung der Verschlussvorrichtung 1 eine Belastungskraft in eine Kraftrichtung F in das Kraftübertragungselement 21 eingeleitet, also entsprechend einer Belastung auf Zug an dem Kraftübertragungselement 21, so wird der Wirkabschnitt 211 in Form der Schlaufe zusammengezogen und verstellt dadurch die Schenkel 244, 245 des Sperrelements 24 radial nach innen, wie dies aus Fig. 10A-10D ersichtlich ist. Dadurch werden die Sperrabschnitte 241 innenseitig der Schenkel 244, 245 in Eingriff mit dem Sperrvorsprung 310 des Eingriffselements 31 gepresst, sodass die formschlüssige Verbindung zwischen den Verschlussteilen 2, 3 bei Belastung an dem Kraftübertragungselement 21 gesichert ist und die Verschlussteile 2, 3 bei Belastung somit nicht ohne weiteres voneinander gelöst werden können.

Sollen die Verschlussteile 2, 3 voneinander gelöst werden, ist das Kraftübertragungselement 21 zu entlasten. Wirken keine Belastungskräfte in die Kraftrichtung F an dem Kraftübertragungselement 21, ist hierfür keine besondere Handlung erforderlich. Ohne Belastung gelangt das Sperrelement 24 des Verschlussteils 2 in die Stellung gemäß Fig. 9A-9D. Wirkt hingegen eine Belastung an dem Kraftübertragungselement 21, so kann ein Nutzer an dem Griff 210 angreifen und diesen in eine Entlassungsrichtung L (geringfügig) hin zur Verschlussvorrichtung 1 ziehen, sodass das Kraftübertragungselement 21 dadurch zumindest im Bereich der Verschlussvorrichtung 1 entlastet wird.

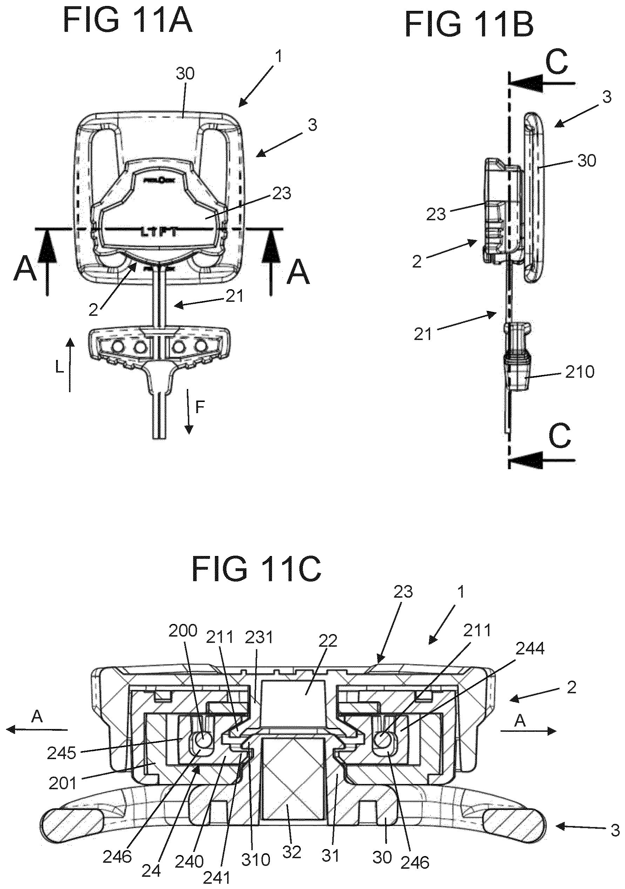

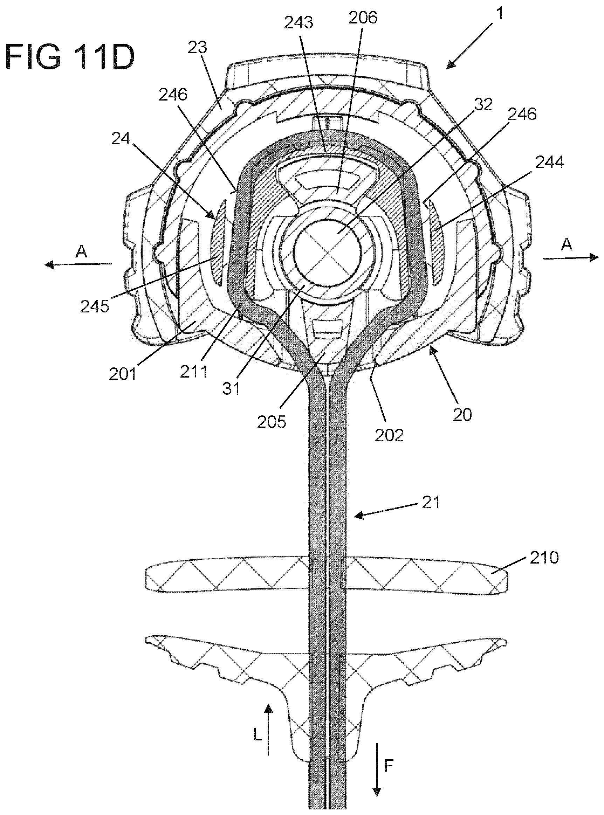

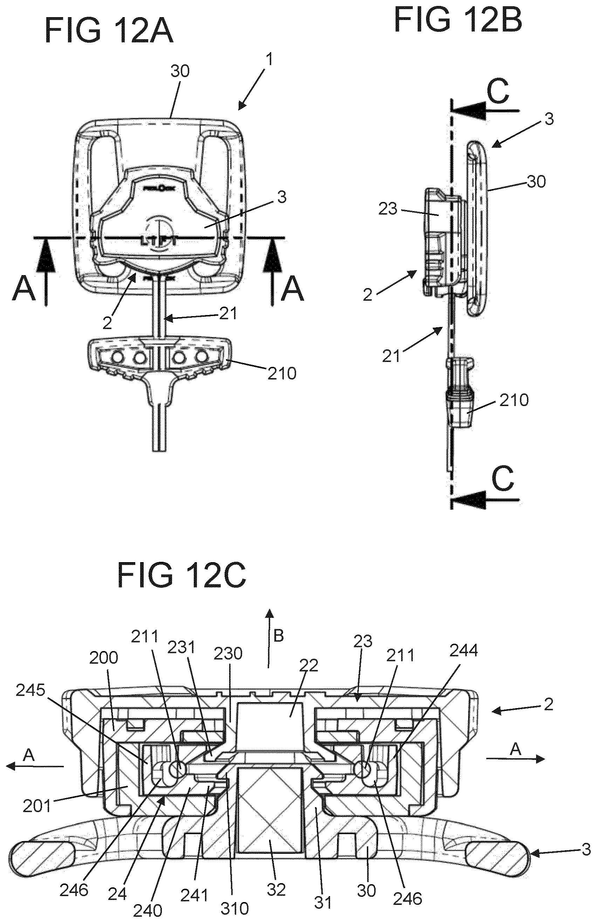

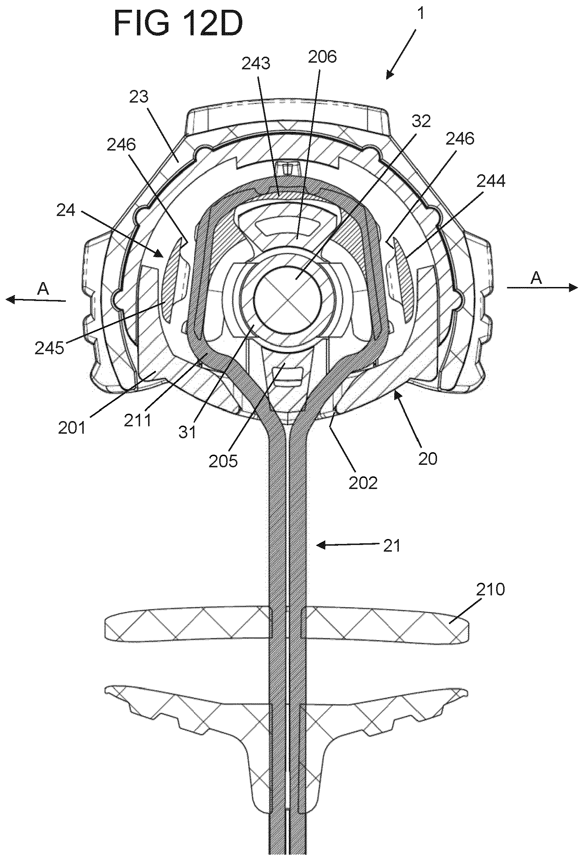

Ist das Kraftübertragungselement 21 und somit das Sperrelement 24 entlastet, entsprechend der Stellung gemäß Fig. 11A-11D, so kann ein Nutzer an dem Betätigungselement 23 angreifen und dieses in die Betätigungsrichtung B zu dem Gehäuse 20 verstellen, wie dies im Übergang von Fig. 11A-11D hin zu Fig. 12A-12D ersichtlich ist. Bei Betätigen des Betätigungselements 23 laufen die Betätigungsabschnitte 231 am Abschnitt 230 auf die Schenkel 244, 245 des Sperrelements 24 auf und spreizen diese dadurch in die Spreizrichtung A nach außen, sodass der Eingriff zwischen dem Sperrelement 24 und dem Eingriffselement 31 aufgehoben wird, wie dies insbesondere aus Fig. 12C ersichtlich ist.

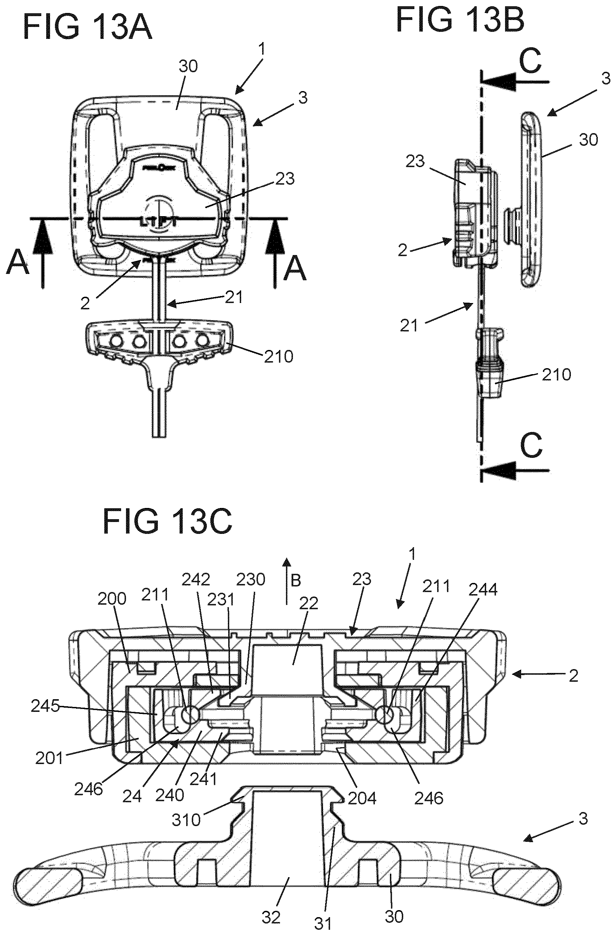

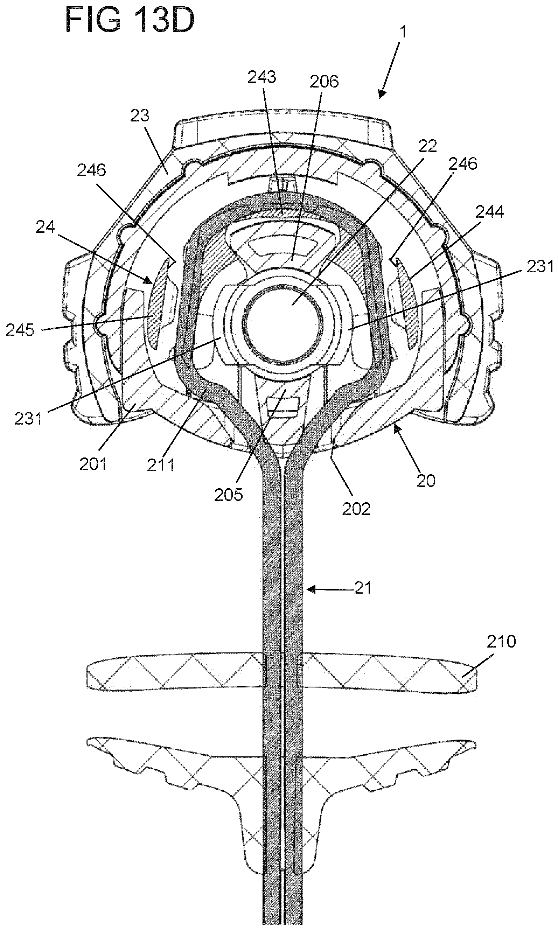

Die Verschlussteile 2, 3 können somit, wie in Fig. 13A-13D dargestellt, voneinander gelöst werden, wobei dies entlang der Betätigungsrichtung B und somit in einem Bewegungsablauf mit Betätigung des Betätigungselements 23 erfolgen kann.

Dadurch, dass das Magnetelement 22 an dem Betätigungselement 23 angeordnet ist, wird bei Betätigung des Betätigungselements 23 auch das Magnetelement 22 von dem Magnetelement 32 am Eingriffselement 31 des Verschlussteils 3 entfernt, sodass die magnetische Anziehung zwischen den Verschlussteilen 2, 3 abgeschwächt wird und die Verschlussteile 2, 3 mit geringer Kraft voneinander abgenommen werden können.

Eine Verschlussvorrichtung 1, wie sie anhand des Ausführungsbeispiels gemäß Fig. 1 bis 13A-13D beschrieben worden ist, kann zum Beispiel zum Verbinden zweier Baugruppen miteinander dienen, von denen eine Baugruppe an dem Kraftübertragungselement 21 und eine andere Baugruppe an der Basis 30 des Verschlussteils 3 angeordnet ist. Die dem Verschlussteil 3 zugeordnete Baugruppe kann hierbei beispielsweise durch einen Gurt 6 verwirklicht sein, der über Befestigungselemente in Form von Gurtanbindungen 300 an der Basis 30 festgelegt ist, wie dies schematisch in Fig. 1 eingezeichnet ist.

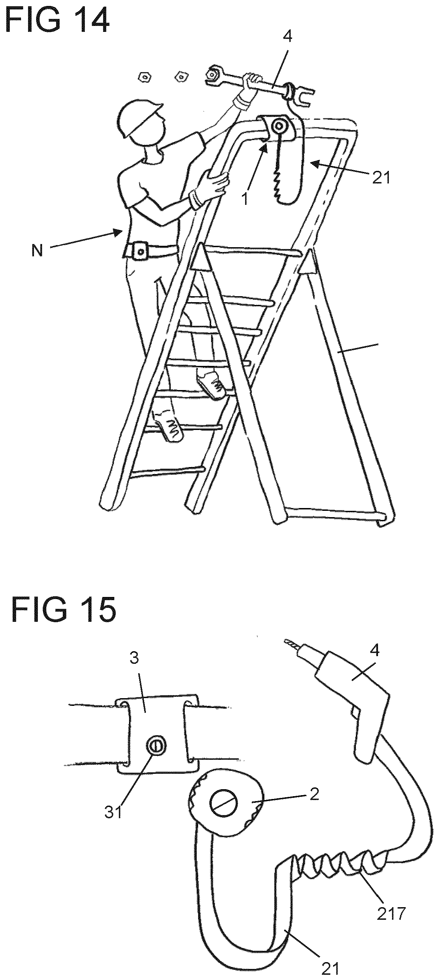

Bei einem in Fig. 14 dargestellten Beispiel ist eine Baugruppe in Form eines Werkzeugs 4 beispielsweise mit dem Kraftübertragungselement 21 verbunden, das bei dem dargestellten Beispiel durch ein biegeschlaffes Zugelement in Form eines Seils, eines Bands, eines Gurts oder eines Riemen ausgebildet ist. Die Verschlussvorrichtung 1 dient in diesem Fall zur Sicherung der Baugruppe in Form des Werkzeugs 4 und legt das Werkzeug 4 an einer übergeordneten Baugruppe 5 in Form einer Leiter fest. Lässt ein Nutzer N, der das Werkzeug 4 handhabt, das Werkzeug 4 fallen, so ist das Werkzeug 4 an der Leiter 5 über die Verschlussvorrichtung 1 gesichert. Möchte der Nutzer N das Werkzeug 4 lösen, kann er die Verschlussvorrichtung 1 zum Öffnen und Trennen der Verschlussteile 2, 3 betätigen und somit das Werkzeug 4 abnehmen.

Beim Arbeiten und Bewegen auf einer Leiter oder einem Gerüst ist eine wechselnde Befestigung zwischen Nutzer und Gerüst damit schnell und sicher durchführbar.

Das Werkzeug 4 kann durch ein elektrisches Werkzeug, zum Beispiel einen Bohrer, einen Akkuschrauber, eine Säge oder dergleichen, oder auch durch ein nicht elektrisches Werkzeug, zum Beispiel einen Hammer, einen Schraubenschlüssel oder jegliches anderes Werkzeug, verwirklicht sein.

Baugruppen, die über eine Verschlussvorrichtung 1 aneinander angeordnet sind, können aber auch vollkommen anderer Art sein, sodass die Verwendung der Verschlussvorrichtung 1 nicht auf Werkzeuge beschränkt ist. Zum Beispiel kann die Verschlussvorrichtung 1 auch an Sportausrüstung, bei Haustieren, zum Transport von Gütern oder zum Verschließen von Klappen und Türen verwendet werden.

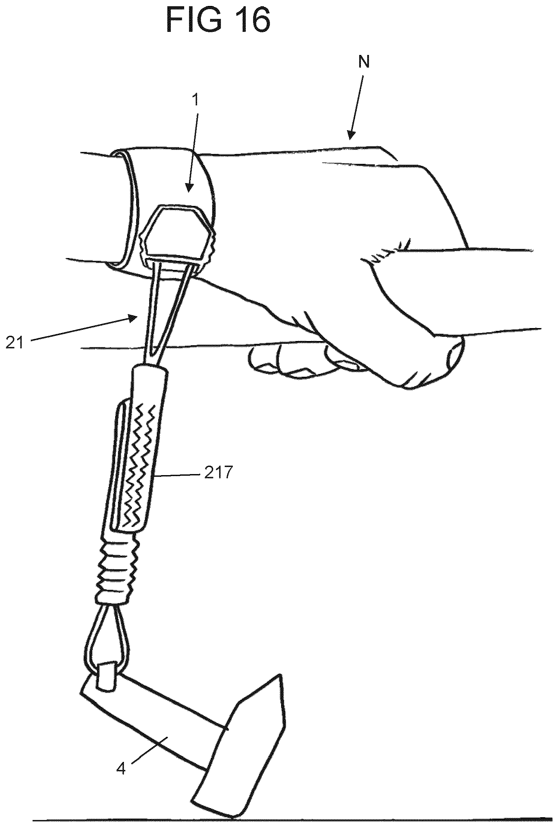

Wie in Fig. 15 und 16 dargestellt, kann an dem Kraftübertragungselement 21 eine stoßmindernder Abschnitt 217 angeordnet sein, der bei einem Fallenlassen der dem Verschlussteil 2 zugeordneten Baugruppe einen Stoß dämpft, indem an dem stoßmindernden Abschnitt 217 eine kraftinduzierte Verformung auftreten kann, beispielsweise eine Längung, wie bei dem Beispiel gemäß Fig. 15 oder 16.

Eine Kraftaufnahme an dem Abschnitt 217 kann zum Beispiel durch Zerreißen von Nähten von gefaltet vernähten Bandlagen erfolgen.

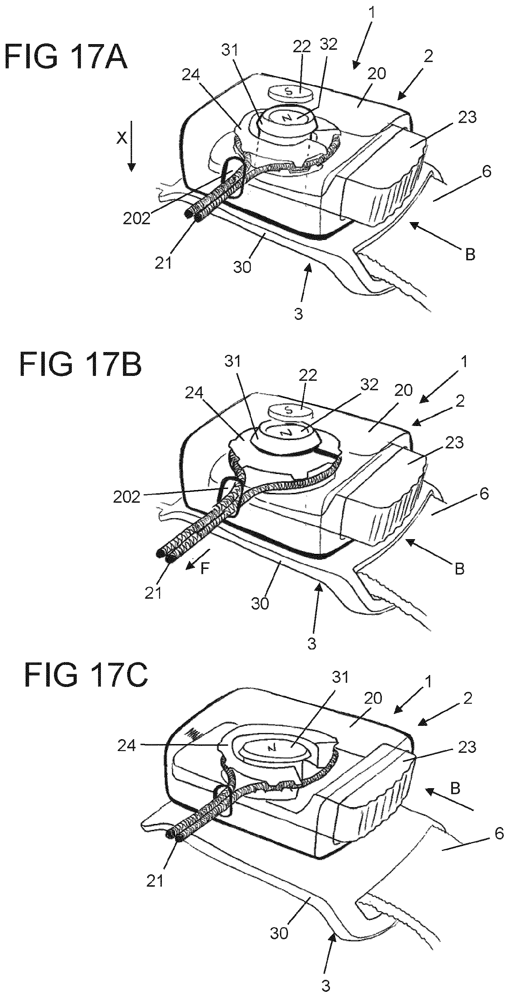

Bei einem in Fig. 17A bis 17C dargestellten Ausführungsbeispiel einer Verschlussvorrichtung 1 sind Verschlussteile 2, 3 entlang einer Schließrichtung X aneinander anzusetzen, sodass in einer Schließstellung ein Eingriffselement 31 des Verschlussteils 3 mit einem Sperrelement 24 des Verschlussteils 2 in Eingriff steht, wie dies in Fig. 17A dargestellt ist. Ein Kraftübertragungselement 21 ist um das Sperrelement 24 an dem Verschlussteil 2 herumgelegt, sodass bei einer Belastung an dem Kraftübertragungselement 21 das Sperrelement 24 radial nach innen gespannt und in Eingriff mit dem Eingriffselement 31 gepresst wird, wie dies in Fig. 17B dargestellt ist. Bei Belastung ist die Verbindung zwischen den Verschlussteilen 2, 3 somit gesichert, indem das Sperrelement 24 in Richtung eines Eingriffs mit dem Eingriffselement 31 gespannt ist.

An dem Verschlussteil 2 ist bei dem in Fig. 17A bis 17C dargestellten Ausführungsbeispiel ein Betätigungselement 23 in Form eines entlang einer Betätigungsrichtung B verschiebbaren Schiebers angeordnet, der mit dem Sperrelement 24 in Wirkverbindung steht. Durch Verschieben des Betätigungselements 23 in die Betätigungsrichtung B zu dem Gehäuse 20 des Verschlussteils 2 kann das Sperrelement 24 gespreizt werden, wie dies im Übergang von Fig. 17B hin zu Fig. 17C ersichtlich ist, sodass die Verbindung zwischen den Verschlussteilen 2, 3 - bei entlastetem Kraftübertragungselement 21 - gelöst werden kann.

Die Verschlussteile 2, 3 weisen bei dem Ausführungsbeispiel gemäß Fig. 17A bis 17C Magnetelemente 22, 32 auf, die das Ansetzen der Verschlussteile 2, 3 magnetisch unterstützen. Das Magnetelement 22 ist hierbei am Gehäuse 20 des Verschlussteils 2 angeordnet, sodass beim Ansetzen eine magnetische Anziehungskraft zwischen dem Eingriffselement 31 des Verschlussteils 3 und dem Gehäuse 20 des Verschlussteils 2 besteht.

Bei einem anderen Ausführungsbeispiel kann das Magnetelement 22 beim Betätigen des Betätigungselements 23 in die Betätigungsrichtung B verschoben werden und damit den Auswurf des Verschlussteils 3 erleichtern und gegebenenfalls magnetisch unterstützen.

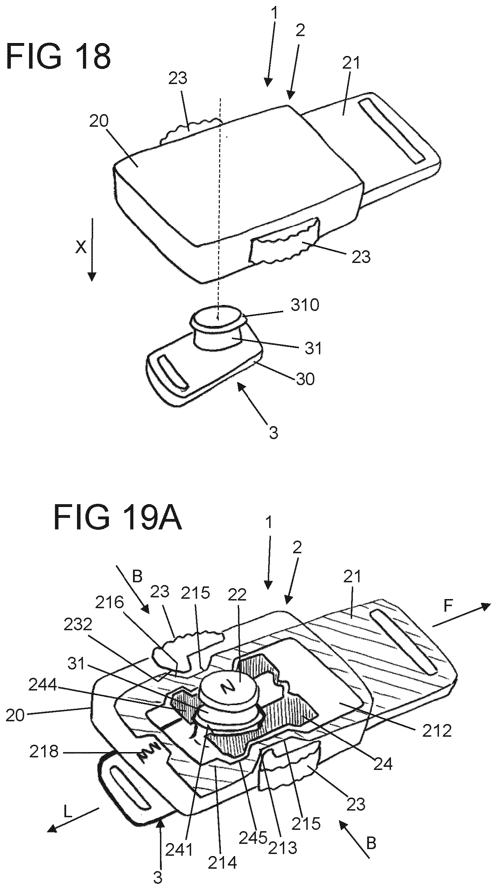

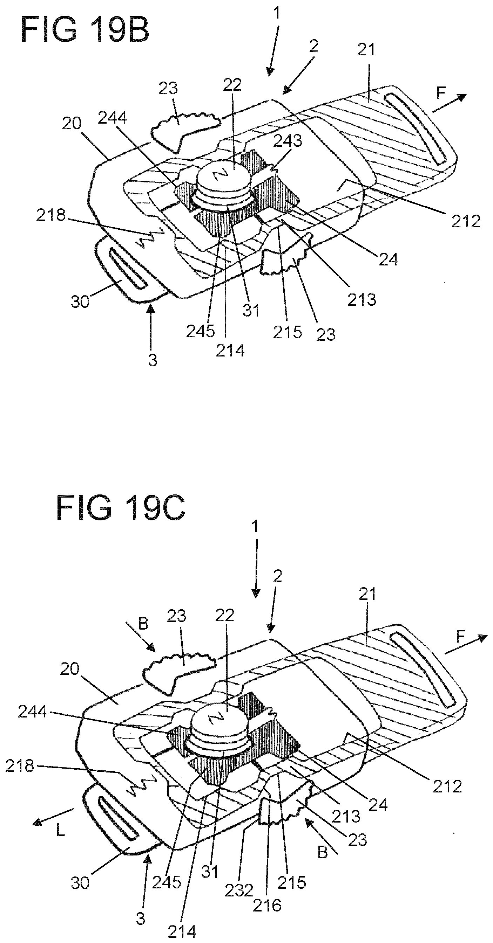

Bei einem in Fig. 18 und 19A-19C dargestellten Ausführungsbeispiel sind Verschlussteile 2, 3 entlang einer Schließrichtung X aneinander anzusetzen, sodass ein Eingriffselement 31 des Verschlussteils 3 mit einem Sperrelement 24 des Verschlussteils 2 in Eingriff gelangt, wie dies aus Fig. 18 in Zusammenschau mit Fig. 19A ersichtlich ist.

Das Sperrelement 24 ist bei dem Ausführungsbeispiel gemäß Fig. 18 und 19A-19C nach Art einer U-förmigen Klammer ausgebildet, mit Schenkeln 244, 245, die über einen Elastizitätsabschnitt 243 elastisch miteinander verbunden und in einem Gehäuse 20 des Verschlussteils 2 eingefasst sind.

Bei dem dargestellten Ausführungsbeispiel ist das Kraftübertragungselement 21 durch ein Schieberelement verwirklicht, das eine zentrale Aussparung 212 aufweist, die umfänglich um das Sperrelement 24 herum erstreckt ist und an einer nach innen hin zu dem Sperrelement 24 weisenden Innenkontur vorspringende Abschnitte 213, 214 zum Wechselwirken mit den Schenkeln 244, 245 des Sperrelements 24 aufweist.

An dem Kraftübertragungselement 21 kann ein Zugelement in Form eines Seils, eines Bands, eines Gurts oder dergleichen angeordnet sein, an dem wiederum eine Baugruppe, zum Beispiel ein Werkzeug, befestigt sein kann.

An dem Gehäuse 20 sind, an voneinander abgewandten Stirnseiten, Betätigungselemente 23 angeordnet, die zum Einwirken auf das Kraftübertragungselement 21 ausgebildet sind. Die Betätigungselemente 23 können zum Beispiel schwenkbar an dem Gehäuse 20 angeordnet sein und können jeweils mit einer an einem Ende ausgebildeten Schrägfläche in eine zugeordnete Ausnehmung 215 außenseitig des Kraftübertragungselements 21 eingedrückt werden derart, dass die jeweilige Schrägfläche 232 auf eine zugeordnete Auflaufschräge 216 im Bereich der Ausnehmung 215 aufläuft.

Sollen die Verschlussteile 2, 3 aneinander angesetzt werden, sind die Betätigungselemente 23 zum Beispiel zu betätigen, sodass durch Wechselwirken der Betätigungselemente 23 mit dem Kraftübertragungselement 21, insbesondere der Schrägflächen 232 mit den Auflaufschrägen 216, das Kraftübertragungselement 21 in eine Entlastungsrichtung L im Gehäuse 20 in die in Fig. 19A dargestellte Stellung verschoben wird. Dies erfolgt entgegen der vorspannenden Wirkung eines zum Beispiel als Druckfeder ausgebildeten Federelements 218.

In der in Fig. 19A dargestellten Stellung können die Verschlussteile 2, 3 aneinander angesetzt werden, sodass das Eingriffselement 31 in Eingriff mit dem Sperrelement 24 gelangt, magnetisch unterstützt durch eine magnetisch anziehende Wirkung von Magnetelementen 22, 32 der Verschlussteile 2, 3. In der in Fig. 19A dargestellten Stellung können die Schenkel 244, 245 insbesondere radial nach außen ausweichen, sodass das Eingriffselement 31 zwischen die Schenkel 244, 245 geschoben werden und in formschlüssigen Eingriff mit den Schenkeln 244, 245 gelangen kann.

Werden die Betätigungselemente 23 losgelassen und wird das Kraftübertragungselement 21 in die Kraftrichtung F belastet, wie dies in Fig. 19B dargestellt ist, so laufen die vorspringenden Abschnitte 213, 214 an der inneren Kontur des Kraftübertragungselements 21 auf zugeordnete vorspringende Abschnitte der Schenkel 244, 245 auf, sodass dadurch die Schenkel 244, 245 radial nach innen belastet und in Eingriff mit dem Eingriffselement 31 gepresst werden. Die Verbindung zwischen den Verschlussteilen 2, 3 ist somit - unter Belastung der Verschlussteile 2, 3 zueinander - gesichert.

Sollen die Verschlussteile 2, 3 wieder voneinander gelöst werden, so können die Betätigungselemente 23, vorzugsweise bei Entlastung des Kraftübertragungselements 21, in die Betätigungsrichtung B in das Gehäuse 20 eingedrückt werden, sodass die Schrägflächen 232 wiederum auf die Auflaufschrägen 216 im Bereich der Ausnehmungen 215 außenseitig des Kraftübertragungselements 21 auflaufen und dadurch das Kraftübertragungselement 21 in die Entlastungsrichtung L verstellen. Das Kraftübertragungselement 21 gelangt somit wiederum in die Stellung gemäß Fig. 19A. Aufgrund der elastischen Spannung zwischen den Schenkeln 244, 245, bewirkt durch den Elastizitätsabschnitt 243, stellen sich die Schenkel 244, 245 radial nach außen, sodass das Eingriffselement 31 aus dem Bereich des Sperrelements 24 entnommen werden kann.

Das Verstellen des Kraftübertragungselements 21 in die Entlastungsrichtung L erfolgt entgegen der vorspannenden Wirkung des Federelements 218. Nach erfolgter Betätigung wird das Kraftübertragungselement 21 selbsttätig in die Kraftrichtung F um einen Verstellweg zurückgestellt, sodass das Kraftübertragungselement 21 in Richtung seiner Schließstellung federvorgespannt ist.

Der der Erfindung zugrunde liegende Gedanke ist nicht auf die vorangehend geschilderten Ausführungsbeispiele beschränkt, sondern lässt sich auch in gänzlich andersgearteter Weise verwirklichen.

Eine Verschlussvorrichtung der beschriebenen Art kann zur Verbindung ganz unterschiedlicher Baugruppen miteinander dienen.

Das Kraftübertragungselement ist nicht notwendigerweise auf Zug zu belasten, sondern kann beispielsweise auch auf Druck belastet werden, wobei in diesem Fall das Kraftübertragungselement drucksteif auszubilden ist.

Das Sperrelement kann eine U-förmige Gestalt aufweisen, was jedoch nicht zwingend ist. Das Sperrelement kann zum Beispiel auch durch einen einzelnen Sperrabschnitt gebildet sein, der zum Beispiel elastisch gegenüber einem Gehäuse des zugeordneten Verschlussteils federvorgespannt ist.

Die Betätigungsrichtung des Betätigungselements kann senkrecht zu einer Kraftrichtung, entlang derer das Kraftübertragungselement zu belasten ist, gerichtet sein, was jedoch nicht zwingend ist. Die Betätigungsrichtung kann auch schräg oder kollinear zur Kraftrichtung gerichtet sein.

### Bezugszeichenliste

- 1: Verschlussvorrichtung
- 2: Verschlussteil
- 20: Gehäuse
- 200, 201: Gehäuseteil
- 202: Öffnung
- 203: Öffnung
- 204: Öffnung
- 205, 206: Führungsabschnitt
- 21: Kraftübertragungselement (Zugelement)
- 210: Griff
- 211: Wirkabschnitt (Schlaufe)
- 212: Aussparung
- 213, 214: Vorsprung
- 215: Ausnehmung
- 216: Auflaufschräge
- 217: Stoßmindernder Abschnitt
- 218: Federelement
- 22: Magnetelement
- 23: Betätigungselement
- 230: Abschnitt
- 231: Betätigungsabschnitt
- 232: Schrägfläche
- 24: Sperrelement
- 240: Boden
- 241: Sperrabschnitt
- 242: Eingriffsöffnung
- 243: Elastizitätsabschnitt
- 244, 245: Schenkel
- 246: Seilrille
- 3: Verschlussteil
- 30: Basis
- 300: Gurtanbindung
- 31: Eingriffselement
- 310: Sperrvorsprung
- 32: Magnetelement
- 4: Nutzbaugruppe (Werkzeug)
- 5: Baugruppe
- 6: Gurt
- A: Spreizrichtung
- B: Betätigungsrichtung
- E: Sperrrichtung
- F: Kraftrichtung
- L: Entlastungsrichtung
- N: Nutzer
- X: Schließrichtung

## Patentansprüche

1. Verschlussvorrichtung (1), mit
einem ersten Verschlussteil (2), das ein Sperrelement (24), ein mit dem Sperrelement (24) wirkverbundenes, entlang einer Kraftrichtung (F) belastbares Kraftübertragungselement (21) und ein relativ zu dem Sperrelement (24) bewegbares Betätigungselement (23) aufweist, und
einem zweiten Verschlussteil (3), das ein Eingriffselement (31) aufweist, wobei das Sperrelement (24) und das Eingriffselement (31) zum Verbinden des ersten Verschlussteils (2) und des zweiten Verschlussteils (3) miteinander aneinander ansetzbar und in einer Schließstellung miteinander verbunden sind,
wobei in der Schließstellung bei einer Belastung des Kraftübertragungselements (21) entlang der Kraftrichtung (F) das Sperrelement (24) durch Kraftwirkung des Kraftübertragungselements (21) in eine Sperrrichtung (E) in Richtung einer Anlage mit dem Eingriffselement (31) belastet ist,
wobei das Betätigungselement (23) betätigbar ist, um das Sperrelement (24) entgegen der Sperrrichtung (E) zum Lösen der Verbindung zwischen dem Sperrelement (24) und dem Eingriffselement (31) zu verstellen,
**dadurch gekennzeichnet,**
**dass** das erste Verschlussteil (2) ein erstes Magnetelement (22) und das zweite Verschlussteil (32) ein zweites Magnetelement (32) aufweist, wobei das erste Magnetelement (22) und das zweite Magnetelement (32) beim Ansetzen des Sperrelements (24) und des Eingriffselements (31) aneinander magnetisch anziehend zusammenwirken,
wobei das erste Magnetelement (22) an dem Betätigungselement (23) angeordnet und bei Betätigung des Betätigungselements (23) gemeinsam mit dem Betätigungselement (23) bewegbar ist.

2. Verschlussvorrichtung (1) nach Anspruch 1, **dadurch gekennzeichnet, dass** das Kraftübertragungselement (21) durch ein auf Zug belastbares Zugelement ausgebildet ist.

3. Verschlussvorrichtung (1) nach Anspruch 2, **dadurch gekennzeichnet, dass** das Kraftübertragungselement (21) biegeschlaff zum Übertragen von ausschließlich Zugkräften ausgebildet ist.

4. Verschlussvorrichtung (1) nach einem der Ansprüche 1 bis 3, **dadurch gekennzeichnet, dass** das Kraftübertragungselement (21) einen Wirkabschnitt (211) aufweist, der zumindest abschnittsweise umfänglich um das Sperrelement (24) herum erstreckt ist.

5. Verschlussvorrichtung (1) nach Anspruch 4, **dadurch gekennzeichnet, dass** der Wirkabschnitt (211) durch eine Schlaufe ausgebildet ist.

6. Verschlussvorrichtung (1) nach einem der vorangehenden Ansprüche, **dadurch gekennzeichnet, dass** das erste Verschlussteil (2) ein Gehäuse (20) aufweist, relativ zu dem das Sperrelement (24) elastisch verstellbar ist.

7. Verschlussvorrichtung (1) nach Anspruch 6, **dadurch gekennzeichnet, dass** das Betätigungselement (23) in Richtung einer nicht betätigten Stellung relativ zu dem Gehäuse (20) kraftbelastet ist.

8. Verschlussvorrichtung (1) nach einem der vorangehenden Ansprüche, **dadurch gekennzeichnet, dass** das Sperrelement (24) einen elastisch verformbaren Elastizitätsabschnitt (243) und zumindest einen an dem Elastizitätsabschnitt (243) angeordneten, mit dem Eingriffselement (31) in Anlage bringbaren Schenkel (244, 245) aufweist.

9. Verschlussvorrichtung (1) nach Anspruch 8, **dadurch gekennzeichnet, dass** das Kraftübertragungselement (21) mit dem zumindest einen Schenkel (244, 245) zum Belasten des zumindest einen Schenkels (244, 245) in die Sperrrichtung (E) in Wirkverbindung ist.

10. Verschlussvorrichtung (1) nach Anspruch 8 oder 9, **dadurch gekennzeichnet, dass** der zumindest eine Schenkel (244, 245) eine Seilrille (246) zum Aufnehmen des Kraftübertragungselements (21) aufweist.

11. Verschlussvorrichtung (1) nach einem der Ansprüche 8 bis 10, **dadurch gekennzeichnet, dass** das Betätigungselement (23) einen Betätigungsabschnitt (231) aufweist, der bei Betätigung des Betätigungselements (23) auf den zumindest einen Schenkel (244, 245) einwirkt, um den zumindest einen Schenkel (244, 245) entgegen der Sperrrichtung (E) zum Lösen der Verbindung zwischen dem Sperrelement (24) und dem Eingriffselement (31) zu verstellen.

12. Verschlussvorrichtung (1) nach einem der vorangehenden Ansprüche, **dadurch gekennzeichnet, dass** das Betätigungselement (23) entlang einer Betätigungsrichtung (B) betätigbar ist, die senkrecht zur Sperrrichtung (E) gerichtet ist.

13. Verschlussvorrichtung (1) nach einem der vorangehenden Ansprüche, **dadurch gekennzeichnet, dass** das Sperrelement (24) einen Sperrabschnitt (241) aufweist, der in der Schließstellung formschlüssig mit dem Eingriffselement (31) in Eingriff steht.

14. System, mit einer Nutzbaugruppe (4) und einer Verschlussvorrichtung (1) nach einem der vorangehenden Ansprüche, wobei die Nutzbaugruppe (4) mit dem Kraftübertragungselement (21) verbunden ist.

## Claims

1. A closure device (1), comprising
a first closure part (2) that includes a locking element (24), a force transmission element (21) operatively connected to the locking element (24), which can be loaded along a force direction (F), and an actuating element (23) movable relative to the locking element (24), and
a second closure part (3) that includes an engagement element (31), wherein the locking element (24) and the engagement element (31) can be attached to each other for connecting the first closure part (3) and the second closure part (3) to each other and are connected to each other in a closed position,
wherein in the closed position, when the force transmission element (21) is loaded along the force direction (F), the locking element (24) is loaded in a locking direction (E) towards contact with the engagement element (31) by the action of force of the force transmission element (21),
wherein the actuating element (23) can be actuated in order to adjust the locking element (24) against the locking direction (E) for releasing the connection between the locking element (24) and the engagement element (31),
**characterized in**
**that** the first closure part (2) includes a first magnetic element (22) and the second closure part (32) includes a second magnetic element (32), wherein the first magnetic element (22) and the second magnetic element (32) cooperate in a magnetically attracting manner when the locking element (24) and the engagement element (31) are attached to each other,
wherein the first magnetic element (22) is arranged on the actuating element (23) and is movable together with the actuating element (23) on actuation of the actuating element (23).

2. The closure device (1) according to claim 1, **characterized in that** the force transmission element (21) is formed by a traction element that can be subjected to a tensile load.

3. The closure device (1) according to claim 2, **characterized in that** the force transmission element (21) is configured by a tensile element capable of withstanding tensile loads.

4. The closure device (1) according to any of claims 1 to 3, **characterized in that** the force transmission element (21) includes an acting portion (211) which at least sectionally is circumferentially extended around the locking element (24).

5. The closure device (1) according to claim 4, **characterized in that** the acting portion (211) is formed by a loop.

6. The closure device (1) according to any of the preceding claims, **characterized in that** the first closure part (2) has a housing (20) relative to which the locking element (24) is elastically adjustable.

7. The closure device (1) according to claim 6, **characterized in that** the actuating element (23) is force-loaded relative to the housing (20) in the direction of a non-actuated position.

8. The closure device (1) according to any of the preceding claims, **characterized in that** the locking element (24) includes an elastically deformable elasticity portion (243) and at least one leg (244, 245) arranged on the elasticity portion (243), which can be brought in contact with the engagement element (31).

9. The closure device (1) according to claim 8, **characterized in that** the force transmission element (21) is operatively connected to the at least one leg (244, 245) for loading the at least one leg (244, 245) in the locking direction (E).

10. The closure device (1) according to claim 8 or 9, **characterized in that** the at least one leg (244, 245) includes a rope groove (246) for receiving the force transmission element (21).

11. The closure device (1) according to any of claims 8 to 10, **characterized in that** the actuating element (23) includes an actuating portion (231) which on actuation of the actuating element (23) acts on the at least one leg (244, 245) in order to adjust the at least one leg (244, 245) against the locking direction (E) for releasing the connection between the locking element (24) and the engagement element (31).

12. The closure device (1) according to any of the preceding claims, **characterized in that** the actuating element (23) can be actuated along an actuating direction (B) that is directed perpendicularly to the locking direction (E).

13. The closure device (1) according to any of the preceding claims, **characterized in that** the locking element (24) includes a locking portion (241) which in the closed position positively is in engagement with the engagement element (31).

14. A system, comprising a useful assembly (4) and a closure device (1) according to any of the preceding claims, wherein the useful assembly (4) is connected to the force transmission element (21).

## Revendications

1. Dispositif de fermeture (1), comprenant
une première partie de fermeture (2) qui présente un élément de blocage (24), un élément de transmission de force (21) relié fonctionnellement à l'élément de blocage (24) et pouvant être chargé le long d'une direction de force (F), et un élément d'actionnement (23) qui peut être déplacé par rapport à l'élément de blocage (24), et
une deuxième partie de fermeture (3) qui présente un élément d'engagement (31), l'élément de blocage (24) et l'élément d'engagement (31) pouvant être placés l'un contre l'autre pour relier la première partie de fermeture (2) et la deuxième partie de fermeture (3) et étant reliés entre eux dans une position de fermeture,
dans la position de fermeture, lorsque l'élément de transmission de force (21) est chargé le long de la direction de force (F), l'élément de blocage (24) étant chargé par l'action de force de l'élément de transmission de force (21) dans une direction de blocage (E) en direction d'un appui avec l'élément d'engagement (31),
l'élément d'actionnement (23) pouvant être actionné pour déplacer l'élément de blocage (24) dans le sens opposé au sens de blocage (E) pour le détachement de la liaison entre l'élément de blocage (24) et l'élément d'engagement (31),
**caractérisé en ce que**
la première partie de fermeture (2) présente un premier élément magnétique (22) et la deuxième partie de fermeture (32) présente un deuxième élément magnétique (32), le premier élément magnétique (22) et le deuxième élément magnétique (32) coopérant par attraction magnétique l'un contre l'autre lors de la mise en place de l'élément de blocage (24) et de l'élément d'engagement (31),
le premier élément magnétique (22) étant agencé sur l'élément d'actionnement (23) et pouvant être déplacé conjointement avec l'élément d'actionnement (23) lors de l'actionnement de l'élément d'actionnement (23).

2. Dispositif de fermeture (1) selon la revendication 1, **caractérisé en ce que** l'élément de transmission de force (21) est formé par un élément de traction qui peut être chargé en traction.

3. Dispositif de fermeture (1) selon la revendication 2, **caractérisé en ce que** l'élément de transmission de force (21) est conçu souple en flexion pour transmettre exclusivement des forces de traction.

4. Dispositif de fermeture (1) selon l'une quelconque des revendications 1 à 3, **caractérisé en ce que** l'élément de transmission de force (21) présente une section active (211) qui s'étend au moins par sections sur la circonférence autour de l'élément de blocage (24).

5. Dispositif de fermeture (1) selon la revendication 4, **caractérisé en ce que** la section active (211) est formée par une boucle.

6. Dispositif de fermeture (1) selon l'une quelconque des revendications précédentes, **caractérisé en ce que** la première partie de fermeture (2) présente un boîtier (20) par rapport auquel l'élément de blocage (24) peut être déplacé élastiquement.

7. Dispositif de fermeture (1) selon la revendication 6, **caractérisé en ce que** l'élément d'actionnement (23) est chargé par une force par rapport au boîtier (20) en direction d'une position non actionnée.

8. Dispositif de fermeture (1) selon l'une quelconque des revendications précédentes, **caractérisé en ce que** l'élément de blocage (24) présente une section d'élasticité (243) élastiquement déformable et au moins une branche (244, 245) agencée sur la section d'élasticité (243) et pouvant être mise en contact avec l'élément d'engagement (31).

9. Dispositif de fermeture (1) selon la revendication 8, **caractérisé en ce que** l'élément de transmission de force (21) est en liaison active avec ladite au moins une branche (244, 245) pour charger ladite au moins une branche (244, 245) dans la direction de blocage (E).

10. Dispositif de fermeture (1) selon la revendication 8 ou 9, **caractérisé en ce que** ladite au moins une branche (244, 245) présente une rainure de câble (246) pour recevoir l'élément de transmission de force (21).

11. Dispositif de fermeture (1) selon l'une quelconque des revendications 8 à 10, **caractérisé en ce que** l'élément d'actionnement (23) présente une section d'actionnement (231) qui, lors de l'actionnement de l'élément d'actionnement (23), agit sur ladite au moins une branche (244, 245) pour déplacer ladite au moins une branche (244, 245) dans le sens opposé au sens de blocage (E) pour le détachement de la liaison entre l'élément de blocage (24) et l'élément d'engagement (31).

12. Dispositif de fermeture (1) selon l'une quelconque des revendications précédentes, **caractérisé en ce que** l'élément d'actionnement (23) peut être actionné le long d'une direction d'actionnement (B) qui est orientée perpendiculairement à la direction de blocage (E).

13. Dispositif de fermeture (1) selon l'une quelconque des revendications précédentes, **caractérisé en ce que** l'élément de blocage (24) présente une section de blocage (241) qui, dans la position de fermeture, est en prise par complémentarité de forme avec l'élément d'engagement (31).

14. Système, comprenant un ensemble utile (4) et un dispositif de fermeture (1) selon l'une quelconque des revendications précédentes, dans lequel l'ensemble utile (4) est relié à l'élément de transmission de force (21).
